(19) Europäisches Patentamt / European Patent Office / Office européen des brevets

(11) EP 3 614 097 A1

(12) EUROPEAN PATENT APPLICATION
published in accordance with Art. 153(4) EPC

(43) Date of publication:
26.02.2020 Bulletin 2020/09

(51) Int Cl.:
G01B 11/00 (2006.01)   B60C 19/00 (2006.01)

(21) Application number: 19747340.8

(22) Date of filing: 25.01.2019

(86) International application number:
PCT/JP2019/002461

(87) International publication number:
WO 2019/151134 (08.08.2019 Gazette 2019/32)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.01.2018 JP 2018013570

(71) Applicant: Seaparts Co. Ltd.
Iwakuni-shi, Yamaguchi 742-0417 (JP)

(72) Inventors:
• YOSHIKAWA Nichio
  Iwakuni-shi, Yamaguchi 742-0417 (JP)
• TANAKA Kenji
  Iwakuni-shi, Yamaguchi 742-0417 (JP)

(74) Representative: Kuhnen & Wacker
Patent- und Rechtsanwaltsbüro PartG mbB
Prinz-Ludwig-Straße 40A
85354 Freising (DE)

(54) TIRE DEGRADATION EVALUATION SYSTEM

(57) Degradation of a used secondhand tire with respect to a material of the tire is evaluated with high accuracy by measuring a crack generated in a region that is not worn due to the use of the tire. Distance data (14) that enables discrimination of a crest portion and a groove portion of a ground contact surface is generated by measuring displacement of the ground contact surface of the tire, ground contact surface image data (15) is generated by photographing the contact surface, evaluation region image data (19) is generated by extracting an evaluation region for detecting a crack from a region of the groove portion, the evaluation region image data (19) is subjected to smooth processing and noise is removed to generate smoothing processing image data (20), edge processing image data (21) that clarifies a boundary portion of the crack is generated by edge processing, the ratio of the boundary portion of the crack of the edge processing image data (21) in the whole is calculated to generate crack ratio data (22), and the crack ratio data (22) is output.

FIG. 1

## Description

TECHNICAL FIELD

The present invention relates to a tire degradation evaluation system for evaluating degradation of a used secondhand tire through measurement of a crack.

BACKGROUND ART

In today's auto mobile recycling industry, the shrinking market for secondhand auto mobile parts has been a concern, and promoting the use of secondhand parts has been a challenge for many years. In Japan, the intention of new products is strong, and the idea of disposable is common. In particular, tires are consumables and demand is high, so it is said that the change cycle with new tires is fast, and the amount of waste tires that are no longer needed is said to be about 1 million tons per year, but there are a lot of tires that are still usable in the waste tires. Although there are various disposal methods, there is a concern that the effects on the environment caused by chemical substances suspected of having endocrine disrupting effects that occur during incineration also affects on humans.

In this background, there is no clear evaluation standard based on quantitative measurement of used and secondhand tires, so that there are many cases where the tires are disposed even though the tires are still usable, by user's discretion and ambiguous judgment standards by visual judgment by inspection workers.

Therefore, it is considered that the distribution cycle of used and secondhand tires can be further extended by providing a clear quality standard and degradation evaluation system.

So far, several patent applications have been filed for tire quality inspection and wear evaluation.

For example, Patent Document 1 discloses an apparatus that automatically performs from tire uneven wear detection to determination of countermeasures under the name of "tire uneven wear management method".

In this invention, the tire shape is read by a scanner, compared with the shape of the same tire when it is new, a differential shape is obtained, an uneven wear database is searched on the basis of the differential shape, the presence and type of the uneven wear is determined, the uneven wear is investigated, and then the tire position changing method and other countermeasure instructions extracted by searching the countermeasure database are displayed. Therefore, it is possible to not depend on the experience and knowledge of the worker, and reduce labor.

Patent Document 2 discloses an invention of a name of "TIRE WEAR MONITORING DEVICE", in which a different color rubber member for wear monitoring having a color different from that of the tread rubber layer is embedded at the bottom of the tread layer of the tire, and the image of the wear of the tread surface is monitored, so that it is possible to monitor tire wear of a running vehicle and easily grasp the time for tire change.

Patent Document 3 discloses a technology that enables accurate and efficient inspection with the name of "TIRE INSPECTION METHOD AND APPARATUS", which allows a defective portion to be easily and quickly found from a tire image without skill.

In this invention, when inspecting preferable or defective quality of a tire on the basis of black and white tone image signals obtained by imaging the tire with a laser-type non-destructive inspection machine, a CCD camera, or the like, a defective portion is detected on the basis of an image signal, and the image signal is displayed on a monitor with the defective portion marked.

Patent Document 4 discloses an invention for detecting and analyzing a crack generated on the side surface of a tire under the name of "APPARATUS AND METHOD FOR TIRE SIDEWALL CRACK ANALYSIS".

The present invention detects a crack generated on the side surface of the tire with an image, converts the image to gray scale, then binarizes the gray scale image in monochrome, detects a discontinuous shape such as a jagged shape or a tapered shape in the binarized image, and measures and evaluates the size of the crack.

Patent Document 5, which is by the applicant of the present application, discloses an invention for detecting and analyzing a crack generated in a groove portion of a tire under the name of "TIRE DEGRADATION EVALUATION APPARATUS, SYSTEM, METHOD, AND PROGRAM THEREOF".

This invention focuses on a crack generated in a groove portion which is a region that does not directly contact the road surface and does not wear due to the use of the tire, detects the groove portion while measuring the displacement of the ground contact surface of the tire, photographs the ground contact surface to binarize the image of the ground contact surface, specifies the cracked portion in the groove portion, obtains the area of the cracked portion, the other area and the ratio thereof, and evaluates the degradation of the tire material with high accuracy.

PRIOR ART DOCUMENTS

PATENT DOCUMENTS

Patent Document 1: JP 2009-102009 A

Patent Document 2: JP 2006-123703 A

Patent Document 3: JP 2001-13081 A

Patent Document 4: US 2015/0139498 A

Patent Document 5: JP 2015-161575 A

## SUMMARY OF THE INVENTION

## PROBLEMS TO BE SOLVED BY THE INVENTION

However, with the technology disclosed in Patent Document 1, there is a problem that, although tire wear can be measured and evaluated, since the appearance of secondhand tire degradation includes not only wear but also cracks, the cracks cannot be measured or evaluated.

Furthermore, even with the technology disclosed in Patent Document 2, since the different color rubber member embedded in the bottom portion in advance is exposed by the wear of the tread portion, the tire wear can be monitored even when the vehicle is running by the monitoring image of the tread surface. However, there is still a problem that it is impossible to measure and monitor the cracks generated with the aging degradation of the rubber material of the tire itself.

Moreover, in the technology disclosed in Patent Document 3, when air is mixed between the top inners of the tires to be inspected, when the binarization is performed, the portion becomes a white level, and a defective portion becomes easy to be detected by marking the portion as a defective portion. However, the tire to be inspected is a new tire, and there is a problem that measurement and evaluation regarding degradation that causes cracks with use or aging cannot be performed.

In both Patent Document 4 and Patent Document 5, a crack is photographed, and the degree of cracking is evaluated after performing monochrome binarization processing with the image processing. However, in particular, a crack generated in the groove portion is thin and linear, so that there is a certain limit to finding the cracked portion with high accuracy, dust such as sand and pebbles may adhere to the surface including the tire groove portion when the tire is used, and this becomes noise in the case of detecting a crack and causes a decrease in accuracy.

The present invention has been made in response to such a conventional situation, and has an object to provide a tire degradation evaluation system that measures a crack generated in a region where the degradation of a used secondhand tire is not worn by the use of the tire, in other words, not a crest portion of the ground contact surface but a groove portion that is hard to be influenced by wear and damage due to vehicle running, and processes information related to the crack considering the information in a shape that conforms to the crack shape while eliminating noise, to evaluate the degradation of the tire material with high accuracy.

## SOLUTIONS TO THE PROBLEMS

To achieve the above object, a tire degradation evaluation system according to a first invention includes: a displacement measurement unit that measures displacement of a ground contact surface of a tire and generates distance data that enables discrimination between a crest portion and a groove portion of the ground contact surface; an imaging unit that photographs the ground contact surface and generates ground contact surface image data; an evaluation region extraction unit that extracts an evaluation region for detecting a crack from a region of the groove portion in the ground contact surface with reference to the distance data from the ground contact surface image data to generate evaluation region image data; a smoothing processing unit that generates smoothing processing image data obtained by smoothing and removing noise due to a difference from an average color of the groove portion with respect to the evaluation region image data; an edge detection processing unit that performs edge processing of detecting a boundary portion where colors of the groove portion and the crack change from the smoothing processing image data as an edge to generate edge processing image data that clarifies the boundary portion of the crack; a degradation evaluation unit that calculates a ratio of the boundary portion of the crack of the edge processing image data in the whole to generate crack ratio data; an output unit that outputs the crack ratio data; and a casing that accommodates the tire, in which the casing includes in the inside thereof, a pair of rollers that supports and rolls the tire, a slider capable of scanning in a width direction of the ground contact surface of the tire accommodated and mounted with the displacement measurement unit and the imaging unit, and a control unit that controls driving of the slider and the rollers.

In the tire degradation evaluation system having the above configuration, the displacement measurement unit measures displacement of the ground contact surface of the tire to obtain distance data, and thereby the tire degradation evaluation system has an effect of enabling discrimination between the crest portion and the groove portion on the ground contact surface of the tire. Furthermore, the tire degradation evaluation system has an effect that the imaging unit obtains the image data by photographing the ground contact surface of the tire. Furthermore, the evaluation region extraction unit operates to extract the evaluation region for detecting a crack from the ground contact surface image data while referring to the distance data.

The smoothing processing unit operates to smooth the noise with respect to a crack generated from deposits on the tire surface and the data related to the surrounding image to remove the noise in advance, and generate the data after the removal as the smoothing processing data. Furthermore, the edge detection processing unit operates to edge-process the smoothing processing image data to clarify the boundary portion of a crack, and generate the clarified data as the edge processing image data.

As the smoothing processing performed by the smoothing processing unit, for example, a Gaussian filter or the like can be employed. Furthermore, as the edge processing performed by the edge processing detection unit, a Canny method or the like can be employed.

Since the groove portion does not contact with the road surface during normal vehicle running, there is a high possibility that a crack appears in that region, which shows aging degradation not due to the wear of rubber, which is the material of the tire. Therefore, in order to measure the crack in the groove portion in particular, the ground contact surface is further photographed while measuring the displacement of the ground contact surface, and the distance data and the ground contact surface image data are acquired. Then, an evaluation region is extracted from the groove portion region using the ground contact surface image data while referring to the distance data, and first, noise is removed from the ground contact surface image data within the evaluation region range by smoothing processing, and then a crack is detected by edge detection.

The groove portion is not in contact with the road surface, and reflectance of light is low in the crack generated, so that the rubber color is measured as black. Since the internal rubber color is visible, it is usually measured as black. On the other hand, the groove in the portion where no crack is generated is relatively gray compared with the cracked portion because of high light reflectance in addition to the influence by degradation. Therefore, in the tire degradation evaluation system according to the present invention, the edge detection processing unit detects the boundary portion between black and gray as an edge, and operates to recognize a portion where the color of the internal rubber is visible as a crack.

Furthermore, the casing accommodates the tire, a pair of rollers provided inside the casing operates to roll the tire, and a slider mounted with the displacement measurement unit and the imaging unit and capable of scanning in the width direction of the ground contact surface of the tire operates so that the displacement measurement unit and the imaging unit can acquire data and images in any of the tire width directions.

Furthermore, in the present invention, the displacement measurement unit and the imaging unit are separated. However, for example, when the distance image sensor as disclosed in JP 2011-179925A is employed, it is considered that the distance image sensor has both functions of the displacement measurement unit and the imaging unit, so that even if a distance image sensor is employed, it does not depart from the scope of the present invention.

Note that, in the present invention, a component including the word "unit", such as the displacement scanning measurement unit, is used. The "unit" conceptualizes and means "element", "electronic circuit", "unit of component", or "apparatus in which they are assembled".

Furthermore, in the tire degradation evaluation system according to the second invention, in the first invention, the slider is provided at an intermediate position between the pair of rollers, and the control unit calculates the tire diameter from the distance information with the ground contact surface of the tire obtained by the displacement measurement unit and the positional information of the rollers, and calculates the tire rolling angle from the tire diameter and the rotation information of the roller.

In the tire degradation evaluation system of the above configuration, in addition to the effects of the first invention, the control unit operates to calculate the tire diameter from the distance information with the ground contact surface of the tire acquired by the displacement measurement unit and the positional information of the rollers, and operates to calculate the tire rolling angle from the tire diameter and the rotation information of the roller.

A slider provided at an intermediate position between a pair of rollers and mounted with a displacement measurement unit operates to be able to calculate the tire diameter by utilizing the fact that distance information with respect to the ground contact surface of the tire varies when the tire diameter varies. Note that "intermediate between a pair of rollers" means that any position is possible as long as it is between the rollers, and does not necessarily indicate positions at equal intervals from each roller.

A tire degradation evaluation system according to a third invention includes in a portable terminal: a displacement measurement unit that measures displacement of a ground contact surface of a tire and generates distance data that enables discrimination between a crest portion and a groove portion of the ground contact surface; an imaging unit that photographs the ground contact surface and generates ground contact surface image data; an evaluation region extraction unit that extracts an evaluation region for detecting a crack from a region of the groove portion in the ground contact surface with reference to distance data from the ground contact surface image data to generate evaluation region image data; a smoothing processing unit that generates smoothing processing image data obtained by smoothing and removing noise due to a difference from an average color of the groove portion with respect to the evaluation region image data; an edge detection processing unit that performs edge processing of detecting a boundary portion where colors of the groove portion and the crack change from the smoothing processing image data as an edge to generate edge processing image data that clarifies the boundary portion of the crack; and a degradation evaluation unit that calculates a ratio of the boundary portion of the crack of the edge processing image data in the whole to generate crack ratio data.

In the tire degradation evaluation system of the above configuration, while the first invention is configured so that the tire can be accommodated in the casing, the entire is mounted on a portable terminal, so that the tire degradation evaluation system operates to acquire data by directly and closely contacting with the tire. Other operations are the same as those of the first invention except for the casing, the pair of rollers, the slider, the control unit, and the output unit.

EFFECTS OF THE INVENTION

In the tire degradation evaluation system according to the first invention, it is possible to measure a crack generated in the groove portion on the ground contact surface of the tire, so that it is possible to quantitatively evaluate degradation over time not due to tire rubber wear. Furthermore, while measuring the displacement of the ground contact surface by the displacement measurement unit and acquiring distance data, the ground contact surface image data is acquired by the imaging unit, so that the groove portion of the ground contact surface can be detected from these pieces of data and a crack generated in the groove portion can be measured with high accuracy.

Furthermore, since the evaluation region is extracted in advance in the groove portion region and the noise removal processing is performed thereafter, it is possible to prevent the occurrence of noise due to tire deposits such as sand and pebbles. Therefore, it is possible to prevent overestimation against degradation due to noise that is likely to occur in a secondhand tire with a low degree of degradation.

Moreover, since the edge detection processing is performed, it is possible to detect a crack in accordance with the substance of the crack portion that is generated at a location that is not in direct contact with the road surface, such as a groove portion of the ground contact surface.

Since the edge detection processing is performed after the smoothing processing and the ratio of the crack boundary portion with respect to the total is calculated to generate the crack ratio data, it is possible to measure the ratio of the crack in accordance with the substance of the crack in the groove portion not installed directly on the road surface, with high accuracy.

In addition, since measurement can be performed while the tire is accommodated in the casing and rolled, uniform data acquisition and tire degradation evaluation can be performed without being influenced by the surrounding environment.

In the tire degradation evaluation system according to the second invention, in addition to the effects of the first invention, the tire rolling angle can be acquired even if the tire diameter varies, so that it is possible to perform uniform measurement of tire degradation in the circumferential direction of the tire.

The tire degradation evaluation system according to the third invention is convenient to carry and can be carried anywhere in the workplace by an inspector who evaluates tire degradation, and evaluation data can be always checked and managed. Therefore, the tire degradation evaluation work can be executed flexibly and efficiently.

BRIEF DESCRIPTION OF THE DRAWINGS

FIG. 1 is a block diagram of a tire degradation evaluation system according to a first embodiment of the present invention.
FIG. 2 is a flowchart of tire degradation evaluation performed by the tire degradation evaluation system according to the first embodiment of the present invention.

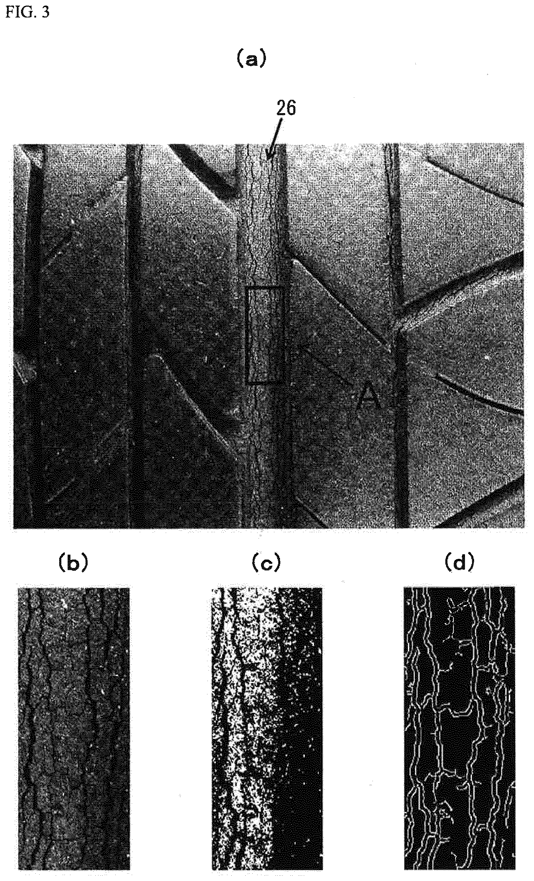

FIG. 3(a) is a conceptual diagram of tire contact surface image data acquired by an imaging unit of the tire degradation evaluation system according to the first embodiment of the present invention, FIG. 3(b) is a conceptual diagram of evaluation region image data indicated within a black frame of a symbol A in FIG. 3(a), FIG. 3(c) is a conceptual diagram of image data when the evaluation region image data of FIG. 3(b) is subjected to monochrome binarization processing, and FIG. 3(d) is a conceptual diagram of edge processing image data when the evaluation region image data of FIG. 3(b) is subjected to edge processing.
FIG. 4(a) is a conceptual diagram of evaluation region image data of an S-rank tire used for evaluating the tire degradation evaluation system according to the first embodiment of the present invention, FIG. 4(b) is similarly a conceptual diagram of evaluation region image data of an A-rank tire, FIG. 4(c) is similarly a conceptual diagram of evaluation region image data of a B-rank tire, FIG. 4(d) is similarly a conceptual diagram of evaluation region image data of a C-rank tire, and FIG. 4(e) is similarly a conceptual diagram of evaluation region image data of a D-rank tire.
FIG. 5 is a table showing results of measuring a crack ratio of each of the S, A, B, C, and D-rank tires used for evaluating the tire degradation evaluation system according to the first embodiment of the present invention.
FIG. 6 is a graph showing measurement results of FIG. 5.
FIG. 7 is a diagram showing the correspondence of ranking when crack ratio data is used as a degradation evaluation value, that is, a diagram showing evaluation threshold data.
FIGS. 8(a) to (c) are conceptual diagrams showing examples of acquisition portions of ground contact surface image data of the tire degradation evaluation system according to the first embodiment of the present invention.
FIG. 9 is a table showing results of evaluating a secondhand tire using the tire degradation evaluation system according to the first embodiment of the present invention.
FIGS. 10(a) and 10(b) are conceptual diagrams showing examples of evaluation results displayed by an output unit of the tire degradation evaluation system according to the first embodiment of the present invention.

FIG. 11(a) is an internal front structural diagram of a tire degradation evaluation system according to Example 1, and FIG. 11(b) is an internal side structural diagram of FIG. 11(a).

FIG. 12 is an enlarged view around a measurement unit of the tire degradation evaluation system according to Example 1.

FIG. 13 is a conceptual diagram regarding calculation of a tire radius in the tire degradation evaluation system according to the Example 1.

FIG. 14 is a partial system configuration diagram centering on a processing unit of the tire degradation evaluation system according to the Example 1.

FIGS. 15(a) to (c) are conceptual diagrams showing movement of a tire that is a measurement target in the tire degradation evaluation system according to Example 1.

FIG. 16 is a flowchart of tire degradation evaluation using the tire degradation evaluation system according to Example 1.

FIG. 17 is a conceptual diagram showing a utilization state of a tire degradation evaluation system according to Example 2 of the present invention.

## EMBODIMENTS OF THE INVENTION

### FIRST EMBODIMENT

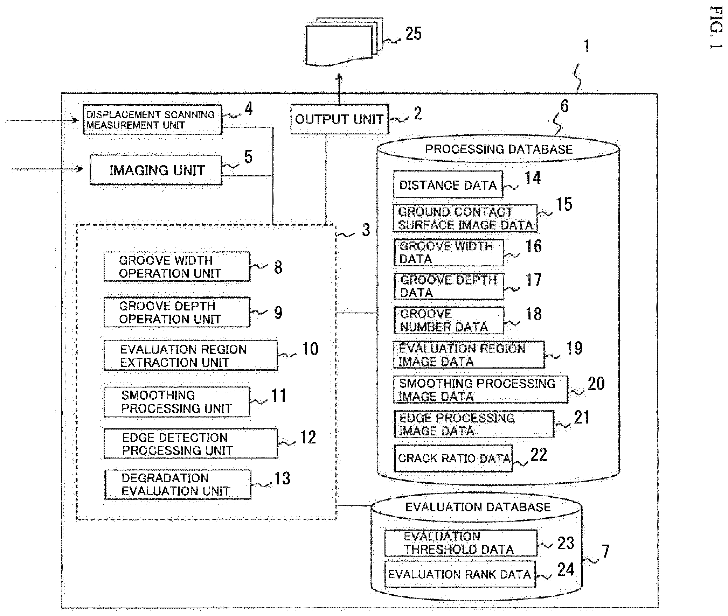

Hereinafter, a tire degradation evaluation system according to a first embodiment of the present invention will be described with reference to FIGS. 1 to 10.

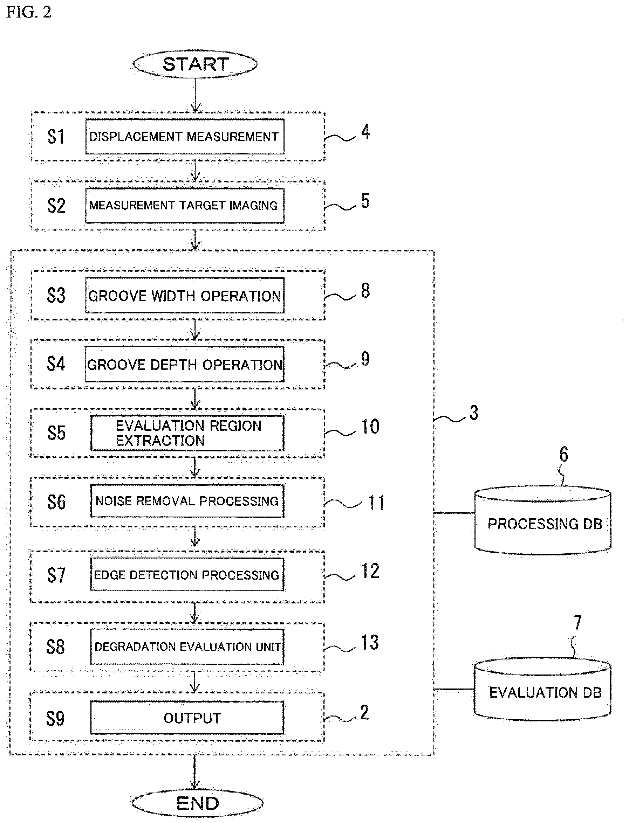

FIG. 1 is a block diagram of the tire degradation evaluation system according to the first embodiment of the present invention. FIG. 2 is a flowchart of tire degradation evaluation performed by the tire degradation evaluation system according to the first embodiment of the present invention. The drawings show the execution process of the tire degradation evaluation system of the present invention. Note that, in FIG. 2, what is indicated by a broken line so as to cover the description about the process indicated by S is a component of a tire degradation evaluation apparatus 1 shown in FIG. 1 and is indicated by the same symbols.

In FIG. 1, the tire degradation evaluation system 1 includes a displacement scanning measurement unit 4, an imaging unit 5, a processing unit 3, an output unit 2, and processing database 6 and evaluation database 7 as a database group. This tire degradation evaluation system 1 can be assumed to be a portable system with which an evaluator can perform evaluation by bringing the components together and taking them close to the surface of the ground contact surface of a secondhand tire. In this case, the output unit 2 may be a small display device or a data transmission unit that transfers data to another device. Alternatively, a system is possible in which, although the components in FIG. 1 are not integrated, the displacement scanning measurement unit 4 and the imaging unit 5 are separated as sensors and provided separately, and data is transmitted to the processing unit 3 by wire or wirelessly. Moreover, it is possible to assume a system in which a secondhand tire is transported into a casing having at least the displacement scanning measurement unit 4 and the imaging unit 5 inside to acquire data, the processing unit 3 performs evaluation on the basis of the data, and the output unit 2 outputs results.

Hereinafter, description will be given with reference to FIGS. 2 and 3.

The displacement scanning measurement unit 4 of the tire degradation evaluation system 1 is arranged perpendicular to the ground contact surface on which the so-called tread pattern of the tire is formed, and measures the unevenness by scanning in the width direction of the ground contact surface of the tire with a sensor such that the crest portion and the groove portion of the tread pattern formed on the ground contact surface can be discriminated. Specifically, it is measured as distance data 14 with respect to the displacement scanning measurement unit 4. Therefore, if the difference between the pieces of distance data of the crest portion and the groove portion is taken, it is possible to acquire the depth of the groove portion with respect to the crest portion or the height of the crest portion with respect to the groove portion. That is, a so-called remaining groove can be acquired. As the sensor used as the displacement scanning measurement unit 4, it is possible to use a sensor that radiates electromagnetic waves such as laser light and infrared rays or ultrasonic waves and detects the reflected waves to measure the distance. Furthermore, since the displacement scanning measurement unit 4 is configured to scan the ground contact surface of the tire, it is possible to perform a distance measurement that enables discrimination between the crest portion and the groove portion of the tread pattern over the width of the tire. The displacement measurement process in step S1 is to measure the displacement on the ground contact surface of the tire by using the displacement scanning measurement unit 4.

The displacement scanning measurement unit 4 stores the distance data 14 in the processing database 6 so as to be readable.

Note that, in the present embodiment, the displacement scanning measurement unit 4 capable of scanning is employed as the displacement measurement unit, but the displacement measurement unit is not necessary to be able to scan as long as being able to measure the height of the crest portion and the depth of the groove portion in the width direction of the ground contact surface of the tire without scanning.

In the present embodiment, the displacement of the tire ground contact surface is measured not only for quantitatively measuring the depth of the remaining groove (remaining groove), but also for grasping the position of the groove portion of the tread pattern existing on the ground contact surface of the tire and photographing an image for measuring cracks and cleavage in the groove portion. The reason why the groove portion is thus selected and measured will be described. Unlike new tires, secondhand tires handled by the present invention are worn out in the ground contact surface due to use. Therefore, cracks due to degradation over time are unlikely to occur, and on the other hand, sudden damage or chipping may occur at the crest portion of the ground contact surface with use. These damage or chipping are also important for tire quality, so that detection is of course important. However, when detecting cracks and cleavage associated with pure degradation of the rubber material due to aging itself, errors are likely to occur, and it is difficult to ensure high accuracy in evaluation of degradation over time.

Therefore, focusing on the cracks and cleavage generated in the groove portion of the ground contact surface that does not contact the ground even under normal use, evaluation is performed on the degradation over time by the cracks and cleavage generated in the groove portion.

In order to be able to select the groove portion accurately, it is necessary to measure the displacement so that the crest portion and the groove portion of the tread pattern can be discriminated.

The imaging unit 5 photographs the tire ground contact surface including the tread pattern, and an already known CCD sensor or CMOS sensor can be used. The imaging unit 5 may also have a scanning function, but since the imaging element can capture an image in a plane, the scanning function is often unnecessary. Photographing the ground contact surface of the tire using the imaging unit 5 is the measurement target imaging process of step S2.

The imaging unit 5 stores a ground contact surface image data 15 related to the photographed ground contact surface in the processing database 6 so as to be readable.

A groove width calculation unit 8 of the processing unit 3 reads the distance data 14 acquired by the displacement scanning measurement unit 4 from the processing database 6 and takes the difference in the tire width direction to generate groove width data 16 and groove number data 18, and stores the data in the processing database 6 so as to be readable, and the process is the groove width calculation process in step S3. Furthermore, the groove depth calculation unit 9 of the processing unit 3 reads the distance data 14 acquired by the displacement scanning measurement unit 4 from the processing database 6, and takes the difference in the height direction of the crest and the depth direction of the groove of the tread pattern of the tire to generate groove depth data 17, and stores the data in the processing database 6 so as to be readable, and the process is the groove depth calculation process in step S4.

The groove width calculation unit 8 and the groove depth calculation unit 9 acquire data related to the position in the tire width direction from the distance data 14, and generate the groove width data 16, the groove depth data 17, and the groove number data 18, including the position data.

In the present embodiment, the displacement scanning measurement unit 4, the groove width calculation unit 8, and the groove depth calculation unit 9 are provided separately, but these may be integrated to form the displacement scanning measurement unit 4 having all functions. In that case, step S1, step S3, and step S4 are only necessary to be combined to be a displacement measurement step (S1).

The imaging unit 5 generates the ground contact surface image data 15 and stores the ground contact surface image data 15 in the processing database 6 so as to be readable, and this process is the measurement target imaging process in step S2. The actual secondhand tire surface is as shown in FIG. 3(a). Although it may be difficult to see in this photograph, there is a crack in the groove portion 26 formed perpendicular to the center. However, since the crest portion of the tire comes into contact with the road surface and friction and wear occur, it seems that cracks and cleavage have not occurred, and at the same time, fine damages caused by the contact with the road surface can be observed. As can be seen from FIG. 3(a), a crack in the groove portion 26 that are not in contact with the road can be observed as a thinly connected shape, but the damages on the crest portion do not show an elongated shape, but are observed to be dispersion in points shape close to a circle or rectangle.

Note that, in the present embodiment, the distance data 14 and the ground contact surface image data 15 are acquired using separate sensors, the displacement scanning measurement unit 4 and the imaging unit 5, but as described above, a distance image sensor or the like having these two functions may be provided, and the distance data 14 and the ground contact surface image data 15 may be acquired from one sensor.

The evaluation region extraction unit 10 of the processing unit 3 reads the ground contact surface image data 15 from the processing database 6, selects the groove portion of the ground contact surface from the ground contact surface image data 15, and extracts and determines an evaluation region in the groove portion 26, and the process is the evaluation region extraction process of step S5. When selecting the groove portion 26, the evaluation region extraction unit 10 can read the groove width data 16, the groove depth data 17, and the groove number data 18 to determine where the groove portion 26 exists on the ground contact surface of the tire.

A state in which the evaluation region is extracted by selecting the groove portion 26 is conceptually shown in a black square range indicated by a symbol A in FIG. 3(a), and the square range is extracted to be shown in FIG. 3(b).

The evaluation region extraction unit 10 stores the data related to the evaluation region determined in the ground contact surface image data 15 as the evaluation region image data 19 in the processing database 6 so as to be readable.

The smoothing processing unit 11 reads the evaluation region image data 19 from the processing database 6, and performs noise removal by smoothing on the evaluation region image data 19 extracted in the groove portion of the ground contact surface image data 15, and the process is the noise removal process in step S6. Since the measurement target is a secondhand tire, there are various deposits on the surface, but when the color of the deposit is black, the cracks generated in the groove portion 26 are black as shown in FIG. 3(a). As a result, when processing an image, it appears as noise.

Moreover, in the present embodiment, since the crack detection process S7 by the edge detection processing unit 12 is performed after the noise removal processing process S6 by the smoothing processing unit 11, when the color difference with the groove portion 26 is large even if it is not black but white, it is detected as an edge, so that it is necessary to remove noise caused by white deposits.

Therefore, in order to improve the accuracy of degradation measurement and evaluation by eliminating noise caused by deposits such as white and black sand and pebbles, which have a large difference from the average color of the groove portion 26, it is important to smooth the image in a range including the surrounding pixels for each pixel.

The evaluation region image data 19 from which noise has been removed by the smoothing processing unit 11 is stored in the processing database 6 so as to be readable as smoothing processing image data 20.

Next, the edge detection processing unit 12 reads the smoothing processing image data 20 from the processing database 6, and detects a cracked portion by edge detection processing on the smoothing processing image data 20 from which noise has been removed, and the process is the edge detection processing process of step S7.

In the tire degradation evaluation system 1 according to the present embodiment, cracks and cleavage generated in the groove portion 26 of the secondhand tire are detected, but the state appears in a thin and long continuous line as shown in FIG. 3(a). Therefore, in order to quantitatively evaluate the cracks and cleavage, it is important to quantitatively measure the portion of the edge, that is, the boundary portion with high accuracy and evaluate on the basis of the quantity.

The inventors invented an invention of converting an image of the cracked state of the groove portion 26 into a monochrome binary and performing quantitative evaluation of the crack using the area ratio of data of white image and black image in the patent application disclosed in Patent Document 5. However, the inventors have found that there is still room for improvement in accuracy, and have reached the present invention.

This will be specifically described with reference to FIGS. 3(a) to (d).

As described above, FIG. 3(a) shows the ground contact surface image data 15 obtained by photographing the ground contact surface of the tire with the imaging unit 5, and FIG. 3(b) is a conceptual diagram of the evaluation region image data 19 indicated within a black frame of symbol A in FIG. 3(a). FIGS. 3(c) and (d) show the evaluation region image data 19 processed and compared in two ways.

FIG. 3(c) is a conceptual diagram of image data when the evaluation region image data 19 is subjected to monochrome binarization processing by the technology disclosed in Patent Document 5, and FIG. 3(d) is a conceptual diagram of edge processing image data when the evaluation region image data 19 is subjected to edge processing by the edge detection processing unit 12 of the tire degradation evaluation system 1 according to the present embodiment.

As apparent from a comparison between FIGS. 3(c) and (d), FIG. 3(d) is more similar to the evaluation region image data 19 of FIG. 3(b). Since a crack generated in the groove portion 26 of the tire is not in contact with the road surface, it is possible to observe the pure degradation of the rubber material due to the aging of the tire itself, and the shape of a crack and cleavage in that case is formed in a thin and long continuous linear shape. Thus, in order to evaluate this quantitatively, image processing capable of quantifying according to a shape is necessary, and the inventors have found that the processing by edge detection is suitable for quantitative evaluation of a crack since the processing accurately detects the boundary portion of the crack, and achieved the present invention.

In FIG. 3(c), depending on how the threshold for binarization processing in the groove portion 26 is set, the noise due to sand, pebbles, or the like turns white or black, so that there is a possibility that it is necessary to determine an individual threshold for each tire, and it is difficult to grasp the overall shape of a crack through multiple secondhand tires. Therefore, the tire degradation evaluation system 1 including the edge detection processing unit 12 that detects an edge where the color changes, that is, the boundary portion as an edge can detect a crack in a groove portion more accurately and consistently for all tires.

The smoothing processing image data 20 subjected to edge processing by the edge detection processing unit 12 is stored in the processing database 6 so as to be readable as edge processing image data 21.

The degradation evaluation unit 13 reads the edge processing image data 21 acquired as shown in FIG. 3(d) from the processing database 6, calculates the ratio of the total area including the area of the edge portion expressed in white and the other expressed in black from the edge processing image data 21, generates the ratio as crack ratio data 22, and stores the crack ratio data 22 in the processing database 6.

Note that, as described above, in the present invention, focusing on the boundary portion of the crack, the ratio of the area of the boundary portion to the entire area is quantified as the crack data 22, and the degree of tire degradation is evaluated by the magnitude of this numerical value. Therefore, for example, when the cleavage is wide and large, it is considered that the evaluation by extracting the boundary portion of the cleavage does not lead to the evaluation of the entire cleavage. However, if the cleavage is large, it is no longer a stage of evaluating degradation, but it is a level that requires immediate disposal of the tire and a change to a new tire. Moreover, it can be easily determined visually in such a case, and it can be handled as out of the evaluation target according to the present invention, so that there is no inconvenience in using the present invention.

Moreover, the degradation evaluation unit 13 reads the evaluation threshold data 23 stored in advance in the evaluation database 7, evaluates the crack ratio data 22 acquired by the degradation evaluation unit 13, generates evaluation rank data 24, and stores the evaluation rank data 24 in the evaluation database 7.

Specifically, the evaluation threshold data 23 includes a threshold of the crack ratio data 22 with respect to a predetermined rank, and the crack ratio data 22 is evaluated by comparing the threshold and the crack ratio data 22 and assigning them to ranks.

The process of calculating the crack ratio data 22 by the degradation evaluation unit 13 and the process of evaluating the crack ratio data 22 as a rank using the evaluation threshold data 23 are step S8.

With the ranking shown by the degradation evaluation unit 13, tires can be classified into ranks according to the degradation state of the tires, and an effect that it is easy to understand as an index is exhibited. Therefore, for example, the utility value as a measure of the price in the secondhand tire market and the utility value as a measure of tire change are increased, and the safety and economy of the secondhand tire can be improved. By increasing or decreasing the interval between thresholds in the evaluation threshold data 23, it is possible to change the rank roughly or in detail as desired, so that it is possible to rank according to use and change the degree of classification of the rank. Note that the rank may be expressed in any of alphabets such as A and B, Chinese characters such as Kou or Otsu, Teki or Hi, or numbers such as 1 and 2.

The output unit 2 outputs any data acquired as a result of each processing content performed by each unit included in the processing unit 3 alone or in combination as the output data 25 directly, or reads and outputs data from each database to the outside as the output data 25, and this process is the output process of step S9. Specific examples of the output unit 2 include a display device such as a CRT, liquid crystal, plasma or organic EL, an output device such as a printer device, and a transmitting device such as a transmitter for transmission to an external device. Of course, it may be an interface for output for transmission to an external device.

The processing database 6 is a database that stores the distance data 14, the ground contact surface image data 15, the groove width data 16, the groove depth data 17, the groove number data 18, the evaluation region image data 19, the smoothing processing image data 20, the edge processing image data 21, and the crack ratio data 22 that are processed by the processing unit 3, so as to be readable.

The evaluation database 7 is a database in which the evaluation threshold data 23 used for the tire degradation evaluation by the degradation evaluation unit 13 and the evaluation rank data 24 after the evaluation are stored so as to be readable.

As described above, according to the tire degradation evaluation system 1 according to the present embodiment, the crest portion and the groove portion 26 of the ground contact surface of the tire are discriminated, and a cracks or cleavage in the groove portion 26 that is not affected by wear due to use of the tire can be measured with high accuracy. Therefore, it is possible to measure only a crack or cleavage caused by the influence of degradation over time, and it is possible to perform quantitative degradation evaluation with high accuracy. Moreover, as already described, rank evaluation can be performed by the degradation evaluation unit 13.

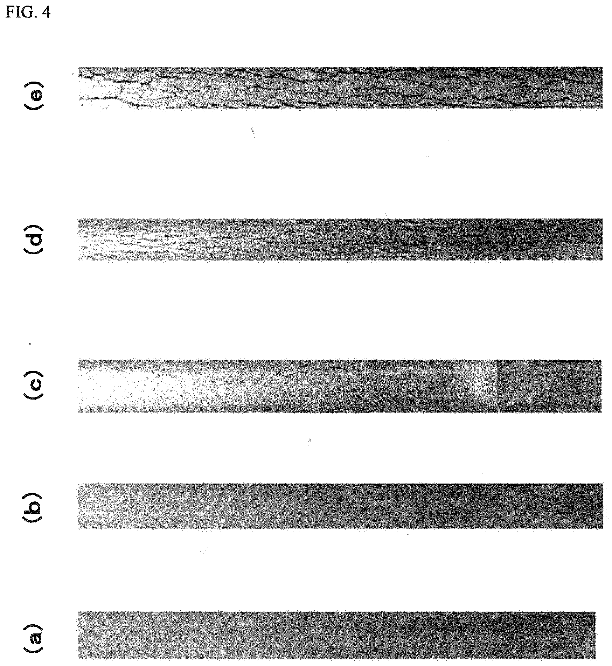

Next, results of testing of how secondhand tires are ranked by the degradation evaluation unit 13 of the tire degradation evaluation system 1 according to the present embodiment using a prototype system will be described with reference to FIGS. 4 to 6.

FIGS. 4(a) to (e) are conceptual diagrams of evaluation region image data of each of the S, A, B, C, and D-rank tires used for evaluating the tire degradation evaluation system according to the first embodiment.

The rank S to D for the image shown in FIG. 4 is a cracked state in the groove portion 26 of the ground contact surface of the secondhand tire determined by the applicant as an example, and each rank tire shown in FIG. 4 is evaluated and ranked by those who are engaged in sorting of the secondhand tire as an expert.

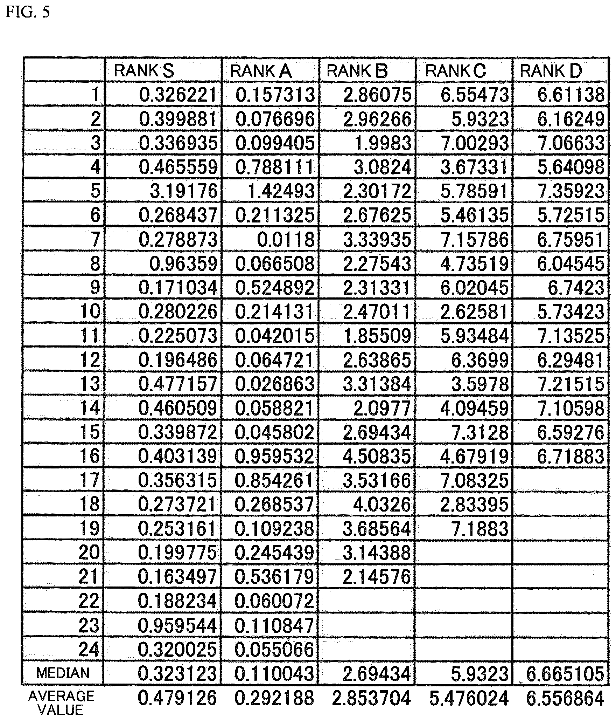

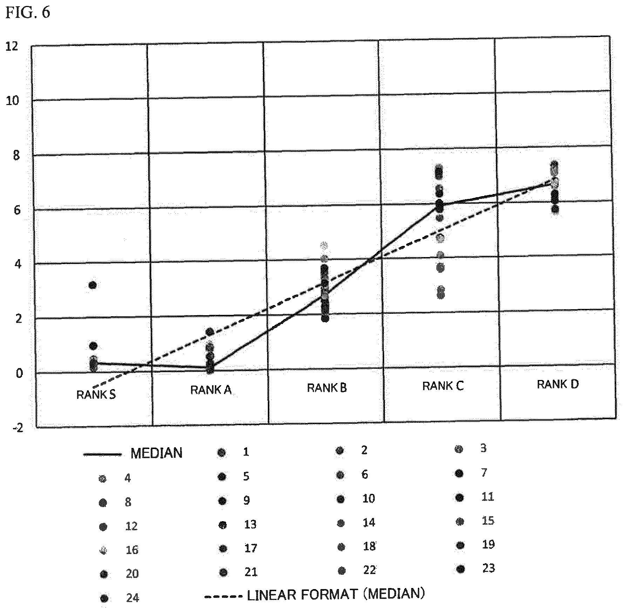

FIG. 5 shows the crack ratio data 22 obtained using the prototype system for the tires of each rank, and FIG. 6 shows a graph of this data. The numbers described below each rank in FIG. 5 and the numbers described on the vertical axis in FIG. 6 represent the crack ratio data 22 in percentage (%). The numbers described below the graph of FIG. 6 are the same as the numbers indicating the measurement location described at the left end of FIG. 5.

Note that, in the present embodiment, a Gaussian filter is used in the smoothing processing in the smoothing processing unit 11, and the Canny method is used in the edge detection processing in the edge detection processing unit 12. Similar processing applies to the image shown in FIG. 3(d).

As shown in FIG. 5, the number of times of measurement is different for each rank S-D, but this does not have a particular purpose. The median is the median in the measurement value group of each rank, and the average value is also the average value in the measurement value group of each rank.

Furthermore, the solid line shown in FIG. 6 connects the median values of the measurement value groups in each rank, and the dotted line expresses the median value of the measurement value groups in each rank as a primary linear format.

The graph in FIG. 6 shows an example in which the percentage of the crack ratio data 22 of rank A, which is lower than rank S, is low, but when actually expanding the groove portion of the tire of rank S and the tire of rank A, the groove surface of the A-rank tire has a smoother groove surface than that of the S-rank tire. Originally, the ranks of these tires are evaluated by human eyes, and the example in which rank S and rank A are reversed in this way shows the difference between human eyes and machine eyes. It indicates that although humans judges and evaluates depending on the color of the tire and the degree of dirt, the eyes of the machine can stably perform highly accurate measurements. In other words, the result is not always in this way, and in the case of different tires, there are many examples in which the ranking by human and machine is the same and the percentage of the crack ratio data 22 of rank A is higher than rank S.

From FIG. 5, the average crack ratio of rank S is 0.479126, which is higher than the average crack ratio of rank A, 0.292188, but the crack ratio gradually increases from rank A to rank D. The reason for the high crack ratio of rank S is, in addition to time of the measurement and judgement ability by the human and the machine, that there is originally almost no crack in rank S and rank A, and there is almost no difference in the degree of tire degradation. Therefore, it is considered that, if slight noise is applied, it is detected as a crack more than that, and as a result, it is evaluated that degradation is progressing. Although it is a result that rank A is less degraded, the crack ratio data 22 of rank S and rank A is a value that is smaller than 0.5%, so that it is actually a slight difference and is not an operational problem.

From the results shown in FIGS. 5 and 6, the inventors have found that there is a correlation between the crack ratio data 22 acquired using the tire degradation evaluation system 1 and the rank of the tire selected by the expert, and classification into ranks S to D of tire selected by the expert is possible by obtaining the crack ratio data 22 by the tire degradation evaluation system 1.

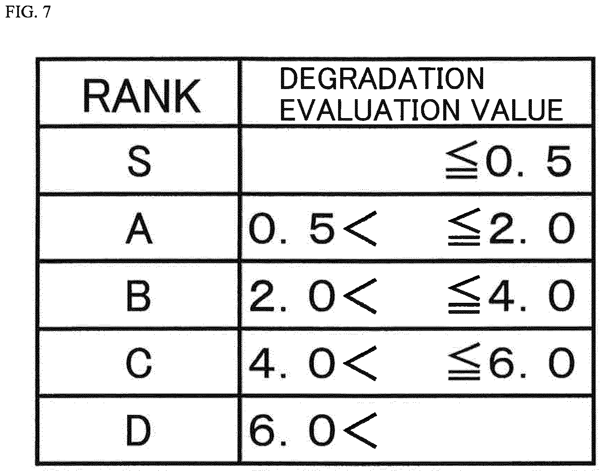

FIG. 7 shows the correspondence of ranking when the crack ratio data 22 acquired as a result of analysis including other test results in addition to FIGS. 5 and 6 is used as the degradation evaluation value. Therefore, FIG. 7 also shows the contents of the evaluation threshold data 23.

As is apparent from FIG. 7, in the tire degradation evaluation system 1 according to the present embodiment, the case where the value of the crack ratio data 22 is 0.5 or less is evaluated as S rank, and the case where the value is larger than 0.5 and 2.0 or less is evaluated as A rank. In the following, it is similarly evaluated as B to D rank.

As described above, the degradation evaluation unit 13 reads the crack ratio data 22 from the processing database 6, judges corresponding degradation evaluation value range of the evaluation threshold data 23 shown in FIG. 7 read from the evaluation database 7, generates the corresponding rank as the evaluation rank data 24, and stores the evaluation rank data 24 in the evaluation database 7 so as to be readable.

Furthermore, the evaluation threshold data 23 for each rank shown in FIG. 7 is not fixed, the interval of the evaluation threshold data 23 can be widened or narrowed as described in paragraph 0028, the rank can be changed in detail or roughly as desired, and the rank itself can be changed according to the application.

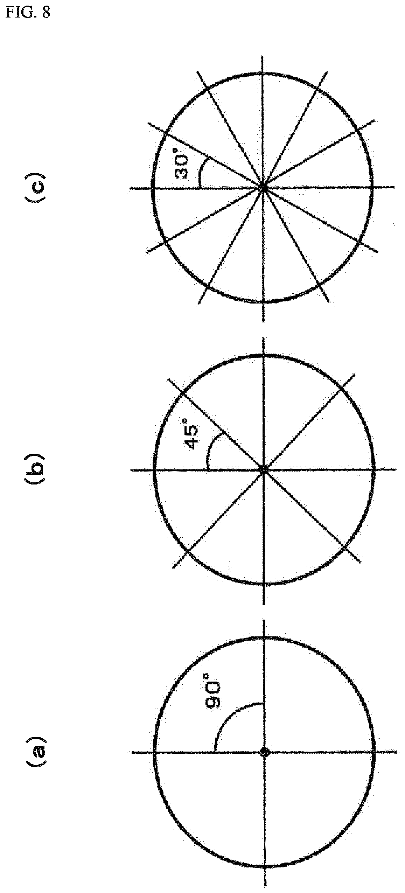

Note that the measurement of the tire contact surface by the tire degradation evaluation system 1 is preferably performed at a plurality of locations in the circumferential direction of the tire. FIGS. 8 (a) to (c) show an example when the tire degradation evaluation system 1 performs measurement, and show a case of measuring at every 90° and measuring four locations, a case of measuring at every 45° and measuring at 8 locations, and a case of measuring at every 30° and measuring at 12 locations.

In the portable tire degradation evaluation system 1, it is assumed that the measurer performs measurement holding the system in his/her hand, so it may be difficult to measure at an accurate angular interval as shown in FIG. 8. However, it is not necessary to perform the measurement at equal intervals, and it is only necessary to improve the accuracy by measuring a plurality of times with one tire.

Of course, a system may be used, in which the displacement scanning measurement unit 4 and the imaging unit 5 of the tire degradation evaluation system 1 are fixed, and the distance data 14 and the contact surface image data 15 are acquired by automatically rotating the tire itself by a certain angle.

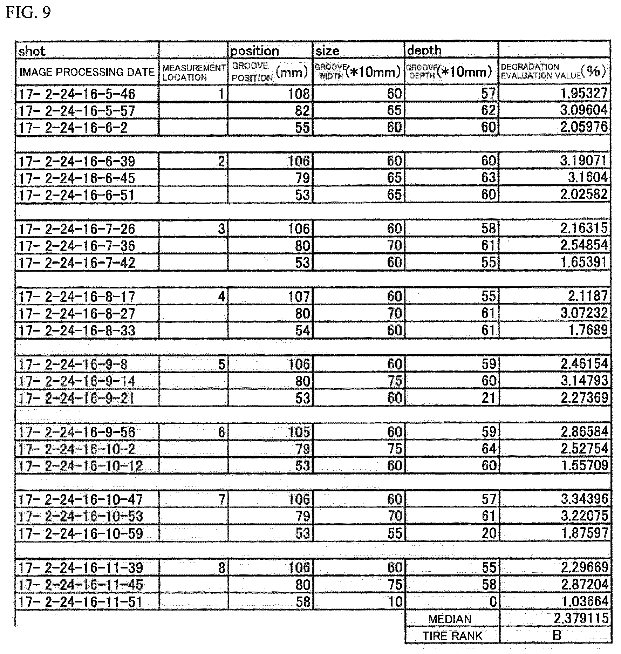

The result of evaluating an actual secondhand tire using the tire degradation evaluation system 1 described above will be described with reference to FIG. 9.

FIG. 9 is a table in which the tire degradation evaluation system 1 is used to measure 8 locations at every 45° shown in FIG. 8(b) for the secondhand tire.

In FIG. 9, shot means a unit in which the distance data 14 and the contact surface image data 15 are acquired, and 1-8 of the measurement locations mean locations selected at every 45° along the circumferential direction of the secondhand tire as described above. The position indicates the distance (mm) from the inside of the tire as the position of the groove portion 26 to be measured, the size indicates the groove width (mm) multiplied by 10, and the depth indicates the groove depth (mm) multiplied by 10. Note that it can be seen that the number of grooves is 3 at any of the 8 measurement locations. From the above, the size corresponds to the groove width data 16 in the system diagram of FIG. 1, the depth corresponds to the groove depth data 17, and the number of grooves of 3 corresponds to the groove number data 18.

Furthermore, in the column of degradation evaluation values in FIG. 9, the crack ratio data 22 in each groove portion is displayed as a percentage (%). As shown in the lower right column of the table, the median value for the crack ratio data 22 at these eight locations is 2.379115, so that the degradation evaluation unit 13 of the tire degradation evaluation system 1 reads the evaluation threshold data 23 shown in FIG. 7 from the evaluation database 7, and uses this data to evaluate the tire rank as B, which is displayed in the lower right column of FIG. 9. The tire rank is stored as evaluation rank data 24 in the evaluation database 7 so as to be readable.

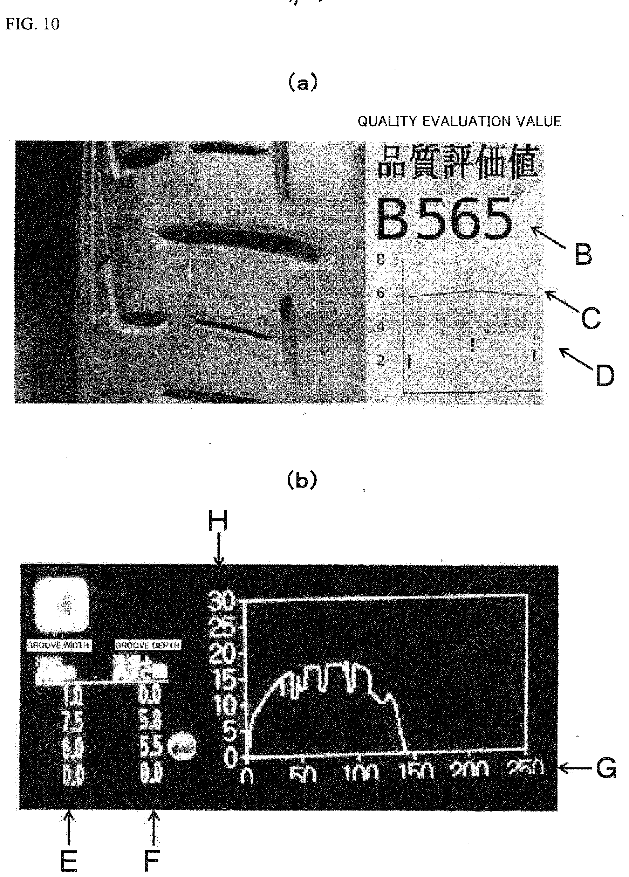

Next, an example of output from the output unit 2 of the tire degradation evaluation system 1 will be described with reference to FIG. 10. FIGS. 10(a) and 10(b) are conceptual diagrams showing examples of evaluation results displayed by the output unit 2.

In FIG. 10(a), the displayed image displays the ground contact surface image data 15 on the left side and the evaluation result on the right side. For "B565" indicated by symbol B, "B" is the evaluation rank data 24, and "565" indicates that the number of grooves is 3, and the groove depth data 17 is 5 mm, 6 mm, and 5 mm from the inside of the tire.

Furthermore, what is indicated by the symbol C is a graph showing the tendency of the groove depth data 17 of 5 mm, 6 mm, and 5 mm, and the inside of the tire is on the left side.

Moreover, the set of plot points indicated by symbol D represents the degradation evaluation value (crack ratio data 22) shown in FIG. 9 in %.

Since the data of the groove depth is displayed together with the number of grooves in this way, it is possible for the user of the system to acquire specific information on the structure of the tire groove to be evaluated, and observe the state of the groove while comparing the image with the measured value and evaluation rank by display of the ground contact surface image data 15 along with the data, so that it is easy to evaluate the degradation of the tire even by visually and is it also possible to check the validity of the evaluation result by the system.

By showing the groove depth data 17 for each tire groove according to the arrangement of the tire grooves, it is possible to grasp the state of uneven wear of the tire that occurs depending on the way of riding the vehicle by the user, the degree of air pressure, and the like.

Note that, in the present embodiment, the groove depth data is shown together with the number of grooves, but in addition to this combination, the output unit 2 can output at least one of at least groove width data, groove depth data, or groove number data, so that the structure of the groove on the ground contact surface of the tire can be grasped more specifically.

Next, in FIG. 10(b), the displayed image is from a display window different from FIG. 10(a), and the symbol E on the left indicates the groove width data 16 in units of mm, the symbol F indicates the groove depth data 17 in units of mm, and what is shown on the right side from the center is the distance data 14 that indicates a state in which the entire tire is traced in the width direction.

In the distance data 14, the symbol G in the drawing indicates the distance in the tire width direction from the inner edge of the tire in units of mm, and the symbol H indicates the distance in the normal direction to the outer circumferential circle of the tire, that is, the direction of the valley height of the tire and the groove depth in units of mm.

By also displaying the information shown in FIG. 10(b), it is possible to check the groove state of the tire surface over the entire width direction of the tire, and along with the evaluation result, the tire degradation state can be grasped with higher accuracy.

In the tire degradation evaluation system 1 according to the present embodiment, both the screens of FIGS. 10(a) and (b), that is, both the ground contact surface image data 15 or the evaluation region image data 19 acquired by the imaging unit 5, and data generated by the degradation evaluation unit 13 are displayed as the output unit 2. Therefore, the amount of information provided to the user is also large, and it is possible to grasp the state of the tire surface from both text information such as numerical values and letters and image information, so that it is possible to provide a system capable of preventing human error by reducing the risk of misperception and misunderstanding.

Note that, in the present embodiment, the data shown in FIGS. 10(a) and (b) are displayed, but other data stored in the processing database 6 and the evaluation database 7 may be read as appropriate, and displayed or transmitted by the output unit 2.

Furthermore, in the present embodiment, the arrangement of the tire groove is displayed with the left side corresponding to the inner side of the tire groove, but the order may be reversed and may be changed for convenience during use or design.

Example 1

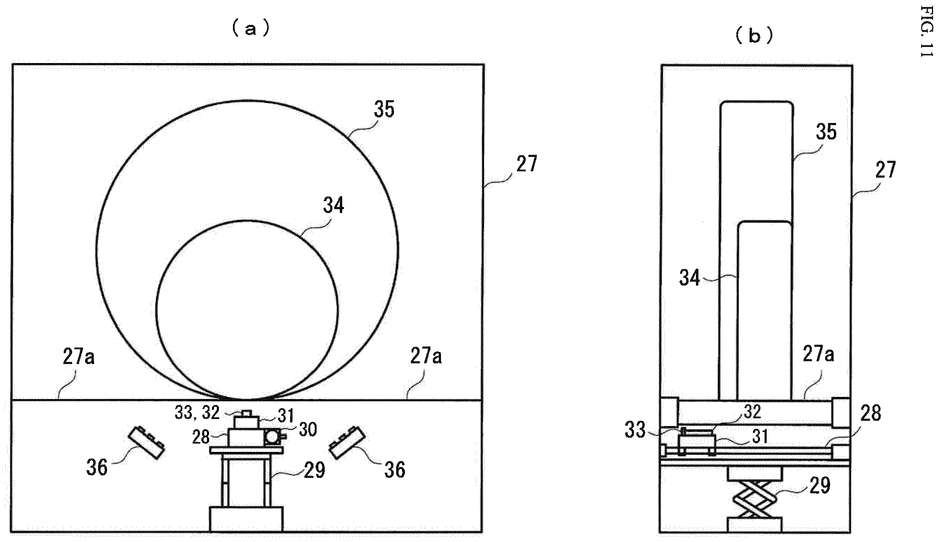

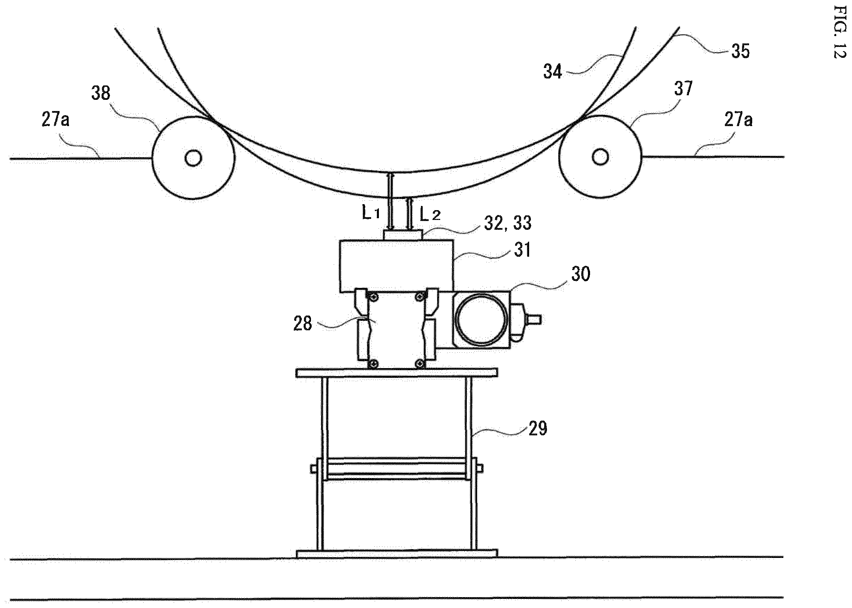

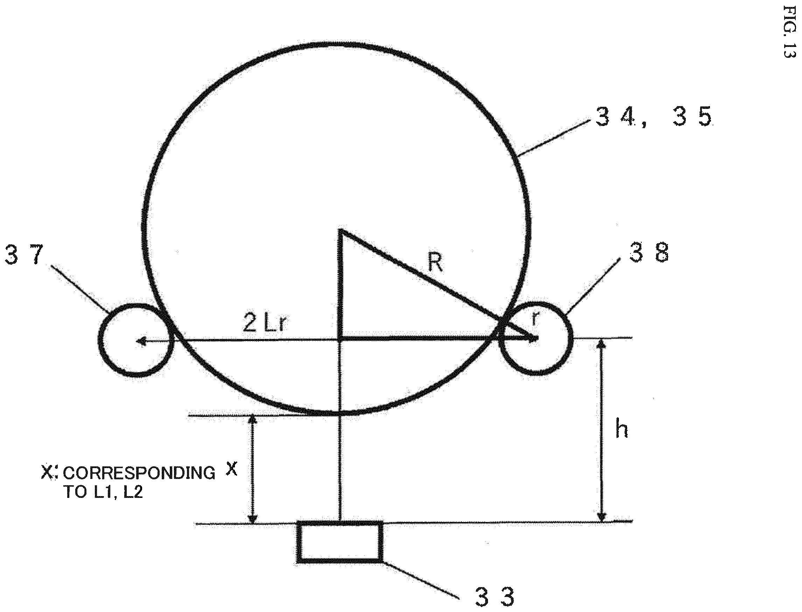

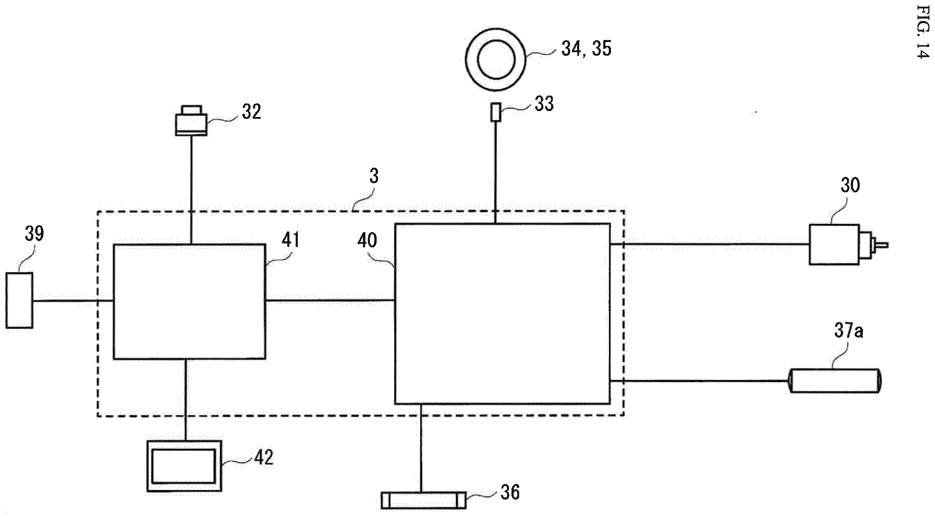

Next, Example 1 of the tire degradation evaluation system according to the present invention will be described with reference to FIGS. 11 to 16. FIG. 11(a) is an internal front structural diagram of a tire degradation evaluation system according to Example 1, and FIG. 11(b) is an internal side structural diagram of FIG. 11(a). FIG. 12 is an enlarged view around the measurement unit of the tire degradation evaluation system according to Example 1, FIG. 13 is a conceptual diagram regarding calculation of the tire radius, and FIG. 14 is a partial system configuration diagram centering on the processing unit 3 of the tire degradation evaluation system according to the Example 1.

In FIGS. 11(a) and (b), the tire degradation evaluation system 1 is characterized in including a casing 27 that can accommodate tires of a small diameter tire 34 and a large diameter tire 35. Although not shown, the tires 34, 35 enter from the left side of FIG. 11(a), stop at the center thereof, and evaluate the tire degradation.

A support floor 27a is provided in the casing 27, and the tires 34, 35 roll on the upper surface thereof. A slider 31 that can be freely moved by a motor 30 on a slide rail 28 installed on a lifter 29 that can move up and down is provided in a substantially central portion, and a camera 32 as the imaging unit 5 and a distance measurement sensor 33 as the displacement scanning measurement unit 4 are mounted on the upper surface of the slider 31, and these are the same as the functions of the imaging unit 5 and the displacement scanning measurement unit 4 in the first embodiment.

Furthermore, an illuminance meter 39 (see FIG. 14) measures the light intensity from a lighting device 36 in order to maintain a light amount appropriate for measurement for tire degradation, and the light intensity of the lighting device 36 is adjusted so as to obtain a light quantity appropriate for measurement when the light intensity is excessive or insufficient.

In FIG. 12, the support floor 27a is provided with a window through which the tire ground contact surface of both the small diameter tire 34 and the large diameter tire 35 can be exposed downward, and a driving roller 37 that drives by a motor 37a (see FIG. 14) and a roller 38 that does not have a driving force are provided in the end portion of the window.

The small diameter tire 34 and the large diameter tire 35 mounted so as to be supported by these two rollers have different distances from the distance measurement sensor 33 on the slider 31 to the tire ground contact surface. That is, since the large diameter tire 35 has a large diameter, the distance L1 from the distance measurement sensor 33 is longer than the distance L2 between the small diameter tire 34 and the distance measurement sensor 33.

In the Example 1, the tire diameter is calculated from the difference between the distances L1 and L2. Specifically, when the tire radius is R, the radius of the driving roller 37 and the roller 38 is r, the distance between the driving roller 37 and the roller 38 is 2Lr, the difference between the center of the driving roller 37 and the roller 38, and the elevation of the distance measurement sensor 33 is h, and the distance from the tire ground contact surface measured by the distance measurement sensor 33 is x (corresponding to L1 or L2 in FIG. 12), the tire radius R is expressed by equation (1).

$$R = (Lr^2 + (x - h)^2 - r^2)/2(r - (x - h)) \qquad (1)$$

If the tire radius can be calculated, the driving roller 37 can be driven according to a desired rotation angle for measuring tire degradation as described with reference to FIG. 8.

In FIG. 14, the processing unit 3 includes an image processing CPU 41 and a sequencer 40 that input a signal from the camera 32 to generate and output the ground contact surface image data 15. Although only the image processing CPU 41 and the sequencer 40 are described in the processing unit 3 in this drawing, the functions of the components such as the various calculation units, extraction units, processing units, and evaluation units described in FIG. 1 are provided in the image processing CPU 41 or the sequencer 40.

The sequencer 40 is connected with, in addition to the image processing CPU 41, the distance measurement sensor 33 that measures the distance from the ground contact surface of the tires 34, 35, the motor 30 that drives the slider 31 on the slide rail 28, the motor 37a for rotating the driving roller 37, and the lighting device 36 for securing a sufficient amount of light for photographing the ground contact surfaces of the tires 34, 35 or measuring a distance (displacement).

The sequencer 40 has a function of measuring groove position, number of grooves, tire width, groove width, and groove depth of the tire ground contact surface along with the distance measurement sensor 33, while rotating the motor 30 and the motor 37a to rotate the tires 34,35, and applying light to the installation surface of the tires 34, 35 by the lighting device 36. Data obtained by the distance measurement sensor 33 is stored in the processing database 6 provided in the sequencer 40 so as to be readable.

Furthermore, a photographing instruction signal for the tire ground contact surface is transmitted to the image processing CPU 41. Then, the ground contact surface image data 15 from the image processing CPU 41 is input and stored in the processing database 6 so as to be readable. The sequencer 40 inputs illuminance information obtained by the illuminance meter 39 from the image processing CPU 41 and adjusts the luminous intensity of the lighting device 36.

Moreover, the sequencer 40 calculates the radius R of the tires 34, 35 from the distance x with the tires 34, 35 to be measured obtained by the distance measurement sensor 33 using the equation (1), and depending on the setting of how many locations are measured in the radius R and the circumferential direction of the tires 34, 35, for example, in a case of measuring at every 45° and measuring at eight locations, the sequencer 40 can control to repeat measurement and rotation eight times for each rotation angle of 30°. At that time, the sequencer 40 can perform functions of outputting a forward/reverse speed control signal to the motor 37a, receiving a pulse signal from the driving roller 37 while rotating the driving roller 37 for each rotation angle, and stopping the tires 34, 35 at a desired angle. Furthermore, the sequencer 40 transmits, to the motor 30, a signal of scanning the slider 31 so as to be able to measure the image and distance (displacement) of the ground contact surfaces of the tires 34, 35 in the width direction of the tires 34, 35 by the camera 32 and the distance measurement sensor 33.

The image processing CPU 41 has a function of causing the camera 32 to photograph the ground contact surface of the tires 34, 35, and the acquired ground contact surface image data 15 is stored in the processing database 6 also provided in the image processing CPU 41 so as to be readable. Furthermore, the image processing CPU 41 has a function of transmitting an illuminance measurement signal from the illuminance meter 39 to the sequencer 40, and a function of reading various pieces of data from the processing database 6 and the evaluation database 7 and displaying the data on the monitor 42.

Moreover, the image processing CPU 41 includes the functions of the evaluation region extraction unit 10, the smoothing processing unit 11, the edge detection processing unit 12, and the degradation evaluation unit 13 of the processing unit 3 shown in FIG. 1.

The monitor 42 may be connected to the image processing CPU 41, receive the ground contact surface image data 15 from the image processing CPU 41, the illuminance measurement result by the illuminance meter 39, and further, the data from the sequencer 40 by the image processing CPU 41, and for example, cause the luminous intensity of the lighting device 36 and the data measured by the distance measurement sensor 33 to be displayed. The monitor 42 corresponds to the output unit 2 in FIG. 1 and has the functions exhibited by the output unit 2 described in the first embodiment.

Although the processing database 6 and the evaluation database 7 shown in FIG. 1 are not shown in FIG. 14, the image processing CPU 41 includes the processing database 6 and the evaluation database 7, the sequencer 40 includes the processing database 6, and data can be exchanged between them.

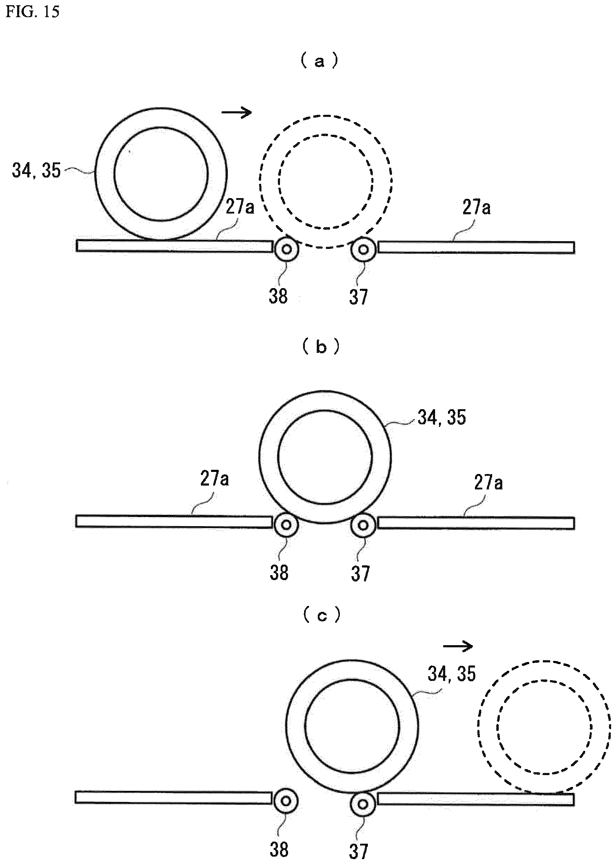

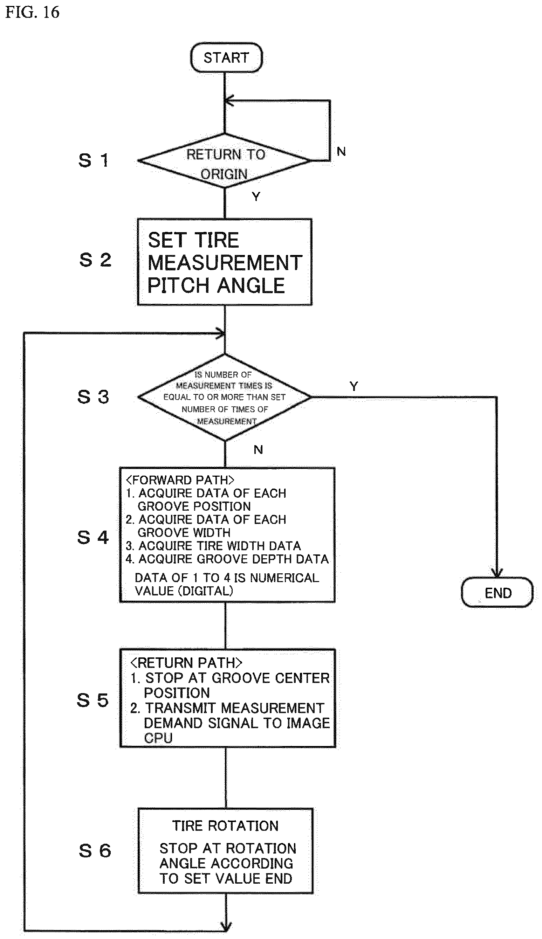

A procedure for evaluating tire degradation using the tire degradation evaluation system 1 according to Example 1 will be described with reference to FIGS. 15 and 16. FIGS. 15(a) to (c) are conceptual diagrams showing the movement of a tire to be measured in the tire degradation evaluation system according to the Example 1, and FIG. 16 is a flowchart of tire degradation evaluation using the tire degradation evaluation system according to Example 1. FIGS. 15(a) to (c) are conceptual diagrams showing the movement of a tire to be measured in the tire degradation evaluation system according to the Example 1, and FIG. 16 is a flowchart of tire degradation evaluation using the tire degradation evaluation system according to Example 1.

In FIG. 16, the tire degradation evaluation system 1 returns to a predetermined origin position on the slide rail 28 by the slider 31 before the measurement (step S1). This operation is automatically performed by the sequencer 40.

Thereafter, step S2 is a tire measurement pitch angle (rotation angle) setting step. In FIG. 15(a), the tires 34, 35 moved into the casing 27 by a measurer roll on the support floor 27a, and are stopped so as to be supported between the driving roller 37 and the roller 38 (FIG. 15(b)), and then the measurement of step S2 is performed. Specifically, the distance measurement sensor 33 measures the distance x from the ground contact surfaces of the tires 34, 35, and the sequencer 40 to which the distance x is input calculates the radius R of the tires 34, 35 from the equation (1), and calculates and sets the rotation angle (pitch angle) of the driving roller 37 according to the result of the operation of the radius R and the number of circumferential measurements of the ground contact surfaces of the tires 34, 35.

Thereafter, in step S3, it is determined whether or not the number of degradation measurements is equal to or more than the set number of times of degradation measurement according to the pitch angle set in step S2. When the number of degradation measurements is less than the set number of times, as a forward path of step S4, the sequencer 40 transmits a signal to the motor 30 to cause the slider 31 to scan, and performs photographing of the ground contact surfaces of the tires 34, 35 and measurement of distance (displacement) by using the camera 32 and the distance measurement sensor 33. The "forward path" in step S4 means the forward path when the slider 31 reciprocates from the origin along the width direction of the ground contact surfaces of the tires 34, 35, and this means reciprocating of one time is performed in the width direction of the tires 34, 35 together with the "return path" of step S5.

As shown in FIG. 16, the data obtained by the distance measurement sensor 33 on the "forward path" is as follows: (1) Each groove position data, (2) Each groove width data, (3) Tire width data, (4) Groove depth data, which are obtained as numerical (digital) data. Data obtained by the distance measurement sensor 33 is tire displacement (distance) data, and these pieces of data are stored in the processing database 6 in the sequencer 40 so as to be readable.

Next, in the "return path" of step S5, the signal from the sequencer 40 to the motor 30 is controlled so that the slider 31 (1) stops at the groove center position, and further, from the sequencer 40, (2) a measurement signal is transmitted to the image processing CPU 41. Receiving this measurement signal, the image processing CPU 41 causes the camera 32 to perform photographing of the ground contact surfaces of the tires 34, 35. It is possible to acquire an image regarding the state of the ground contact surface (including the inside of the groove) as shown in FIG. 3(a) by photographing with the camera 32, and therefore, as shown in FIGS. 3(b) and (d), an image for use in evaluating a crack inside the groove can also be acquired.

Thereafter, in steps S6, the tires 34, 35 are rotated by the tire measurement pitch angle set in step S2. This operation is performed by transmitting a driving signal from the sequencer 40 to the motor 37a.

After rotating the tires 34, 35 by the tire set pitch angle, the process returns to step S3 again, and when the number of times of degradation measurement of the peripheral surfaces of the tires 34, 35 is less than the set number of times, steps S4 to S6 are repeated again, and when the set number of times is reached, the process ends.

When the number of measurements is reached, the sequencer 40 transmits a driving signal to the motor 37a to rotate the tires 34, 35, waits for the rotation of the tires 34, 35 to stabilize, and then transmits a stop signal to the motor 37a, so that the inertia of the tires 34, 35 is used to act to the tires 34, 35 to roll to the outlet in the casing 27 as shown in FIG. 15(c).

Thereafter, steps S3 and S4 shown in FIG. 2 are performed by the sequencer 40 and the distance measurement sensor 33, and steps S5 to S9 in FIG. 2 are performed using the image processing CPU 41. Data obtained in each step is stored in the processing database 6 and the evaluation database 7 so as to be readable.

As described above, in the tire degradation evaluation system 1 according to the Example 1, the casing 27 is provided to accommodate the tires 34, 35, and the lighting device 36 is used when the ground contact surface of the tire is photographed and the displacement of the surface is measured. Therefore, it is difficult to be affected by the external environment, and the tire degradation can be evaluated uniformly. The tires 34, 35 can be easily installed, the tire setting pitch angle can be automatically set according to the desired number of times of measurement of the ground contact surface depending on the positional relationship between the driving roller 37 and the roller 38, and the distance measurement sensor 33, automatically rotation can be performed by the tire set pitch angle according to the number of times of measurement by the action of the driving roller 37 and the roller 38, and the tire can be sent from the casing 27 at the end of the measurement, so that more efficient evaluation of the degradation of the tire is possible.

Example 2

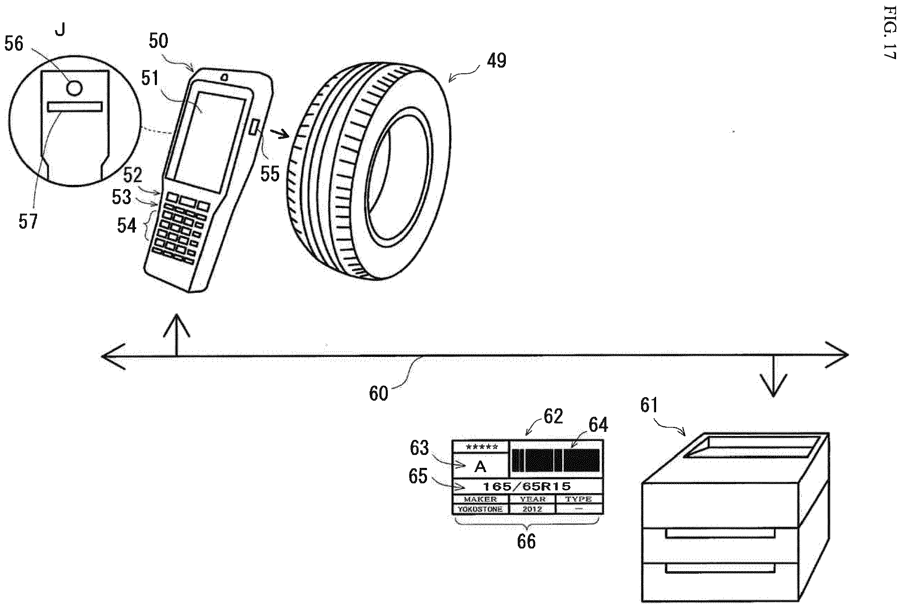

Next, a tire degradation evaluation system according to Example 2 of the present invention will be described with reference to FIG. 17.

The tire degradation evaluation system according to Example 2 is configured by integrating the configuration in a handy terminal 50. That is, the form in which the tire degradation evaluation system 1 of FIG. 1 is configured as the handy terminal 50 is Example 2.

FIG. 17 is a conceptual diagram showing a utilization state of the tire degradation evaluation system according to Example 2 of the present invention. In FIG. 17, the handy terminal 50 includes, in the inside or the surface thereof, the output unit 2, the imaging unit 5, the processing unit 3, the processing database 6, and the evaluation database 7 that are provided in the tire degradation evaluation system 1 according to the first embodiment shown in FIG. 1. Note that the displacement scanning measurement unit 4 of the tire degradation evaluation system 1 includes a displacement measurement unit that can measure the displacement of the tire width because it is considered difficult to provide a scanning mechanism in the handy terminal 50, but it may be a displacement scanning measurement unit provided with a scanning mechanism.

For example, the display screen 51 corresponds to the output unit 2 in the tire degradation evaluation system 1. Since the handy terminal 50 outputs to a printer 61 via a communication network 60 as will be described later, the handy terminal 50 includes a transmitting device (not shown) as the output unit 2 in the inside.

On the back surface of the handy terminal 50 indicated in the position enclosed by a solid line as the symbol J in FIG. 17, a displacement sensor 57 corresponding to the displacement measurement unit and an imaging sensor 56 corresponding to the imaging unit 5 of the tire degradation evaluation system 1 are provided. The displacement sensor 57 and the imaging sensor 56 may be sensors having two functions such as a distance image sensor.

Moreover, when a lighting device using an LED or the like as a light source is provided to compensate for the shortage of light during measurement or imaging by the displacement sensor 57 and the imaging sensor 56, the displacement of the tire ground contact surface can be measured and the groove portion of the tire ground contact surface can be photographed without depending on the surrounding environment.

The other processing unit 3, processing database 6 and evaluation database 7 are not shown, but are provided inside the handy terminal 50.

Moreover, an operation key 52, a function key 53, and a numeric keypad 54 are provided on the surface of the handy terminal 50 as input units, and a power switch 55 is provided on the side surface.

The handy terminal 50 according to Example 2 is for performing degradation evaluation on the basis of the information obtained from a tire 49, printing an evaluation label 62 on the printer 61 via the communication network 60, directly attaching the evaluation label 62 to the tire 49, or attaching the evaluation label 62 to a delivery slip, an invoice, a cover sheet or the like attached to the tire 49, and shipping the tire 49 in the case of secondhand tire sales, or returning to the owner in the case of simple entrustment of evaluation of a secondhand tire. Note that the communication network 60 may be either wired or wireless.

Hereinafter, description will be given of how to handle the handy terminal 50 with reference to FIG. 17.

First, the power switch 55 of the handy terminal 50 is turned on to start the handy terminal 50, and basic data regarding the tire 49 is input. Specifically, tire specification data 65 related to specifications such as tire width, rim diameter and flatness ratio, and tire manufacturing data 66 related to manufacturing such as a tire manufacturer name and manufacturing year are input using the numeric keypad 54. At this time, it is desirable that the numeric keypad 54 includes a key that can be converted into an alphabetic character including uppercase letters and lowercase letters or a symbol character. The input basic data regarding the tire 49 may be stored so as to be readable by providing a separate input database.

In the handy terminal 50, various keys are provided as an input unit, and basic data related to the tire 49 can be input. Therefore, a timer unit may be provided in the internal processing unit 3. Since the timer unit recognizes the time when the measurement or evaluation is being performed, the use period of the tire can be calculated by taking the difference from the production time included in the tire manufacturing data 66. Therefore, it can be generated as aged degradation data by the timer unit and stored in the evaluation database 7 so as to be readable, and the degradation evaluation unit 13 can incorporate this into the evaluation as aged degradation with time.

When inputting various data, it is preferable to display the input state on the display screen 51 so that there is no input mistake.

Next, the imaging sensor 56 and the displacement sensor 57 of the handy terminal 50 are arranged so that data can be acquired vertically with respect to the ground contact surface on which the tread pattern of the tire 49 is formed. The imaging sensor 56 photographs the tire ground contact surface including the tread pattern, and the displacement sensor 57 measures the unevenness of the tread pattern formed on the tire ground contact surface so that the crest portion and the groove portion can be distinguished from each other. As described above, the imaging sensor 56 corresponds to the imaging unit 5 of the tire degradation evaluation system 1 according to the first embodiment, and the displacement sensor 57 similarly corresponds to the displacement scanning measurement unit 4, and functions and use of them are similar to those of the tire degradation evaluation system 1. However, when the displacement sensor 57 does not have a scanning function, the scanning function in the displacement scanning measurement unit 4 cannot be exhibited, but the displacement in the width of the tire 49 can be measured. Note that, in the case of photographing using the imaging sensor 56 and the displacement sensor 57, it is preferable to operate using the assigned operation key 52.

Data obtained on the basis of images obtained using these sensors is stored and processed, and degradation of the tire 49 is evaluated. The data processing method, data storage method, and tire degradation evaluation method are as described in the tire degradation evaluation system 1 according to the first embodiment.

When arranging vertically so that data can be acquired from the ground contact surface of the tire 49 using the imaging sensor 56 and the displacement sensor 57 of the handy terminal 50, if the measurer who owns the handy terminal 50 is skilled, it can be used with the handy terminal 50 as it is. However, considering the universality and versatility of the acquired data, a hood or jig that can be attached to and detached from the handy terminal 50 may be provided so that the measurement result is independent of the level of proficiency of the measurer.

Specifically, the hood is a cylindrical enclosure that can be attached to and detached from around the imaging sensor 56 and the displacement sensor 57 arranged on the back surface of the handy terminal 50. This hood has a shape and dimensions that can contact the ground contact surface of the tire 49, can take a desired distance between the imaging sensor 56 and the displacement sensor 57, and the ground contact surface of the tire 49 at the time of measurement, and, at the same time, can secure verticality. Even if it is not such a hood shape, it is provided with a rod-like or plate-like first structure that extends tangentially to the ground contact surface of the tire 49 at one end of the rod-like structure, and may be provided with a plate-like second structure that comes into contact with the back surface of the handy terminal 50 at the other end of the rod-like jig, so that it is configured as a jig different from the hood shape, including the first and second structures and a rod-shaped structure formed vertically between them with a desired length.

The hood and jig may be provided individually according to the tire diameter and the tire width. Providing for each tire type facilitates the contact with the ground contact surface of the tire 49, and it is expected to improve the accuracy of data measured or imaged by the displacement sensor 57 and the imaging sensor 56, so that it is considered that the accuracy of the tire degradation evaluation using the handy terminal 50 is also improved.

When the degradation evaluation is completed, the result is transmitted from the transmitting device in the handy terminal 50 to the printer 61 via the communication network 60, and the evaluation label 62 is printed. On this evaluation label 62, an evaluation rank 63 indicated as "A" in the alphabet in FIG. 17 is printed as an evaluation result. Four black stars are listed on the evaluation rank 63. The number of black stars and the evaluation rank 63 are related, and the evaluation rank is "S", "A", "B", "C", or "D" from excellent products. Correspondingly, the number of black stars is written as 5, 4, 3, 2, or 1. That is, it can be understood that the evaluation rank is "A" even with the number of black stars indicated on the evaluation label 62.

On the evaluation label 62, the tire specification data 65 and the tire manufacturing data 66 relating to the tire 49, which are input in advance using the numeric keypad 54, are also printed.

Moreover, a barcode 64 obtained by converting all of the information printed on the evaluation label 62 is also printed. The barcode 64 may include a management serial number, symbol or the like that is not displayed on the evaluation label 62. The serial number and symbol at that time may be input using the numeric keypad 54 together with the tire specification data 65 and the tire manufacturing data 66 regarding the tire 49.

The generation of the barcode 64 may be performed by the degradation evaluation unit 13 of the processing unit 3 after the tire degradation evaluation, or may be performed by separately providing a barcode generation unit in the processing unit 3. The degradation evaluation unit 13 and the barcode generation unit read out basic data related to the tire 49 from the input database, read out the degradation evaluation result for the tire 49 from the degradation evaluation unit 13, and convert the result into a barcode.

The generated barcode 64 may be stored in a similar manner to the evaluation rank data 24 of the evaluation database 7, or may be stored in the input database, or a barcode database may be separately provided so that the barcode is stored therein.

The evaluation rank 63, which is the information printed on the evaluation label 62, is read from the evaluation database 7, the tire specification data 65 and the tire manufacturing data 66 are read from the tire basic database, and the barcode 64 is read from the barcode database or the like by the transmitting device, and is transmitted to the printer 61.

Note that, in the present embodiment, the barcode 64 is used as the code. However, any code can be used as long as it is a code represented by a figure, a symbol, or a character, or it may be a code expressed in two dimensions. Of course, the handy terminal 50 is provided with a code generation unit and a code generation function corresponding to the code.

In the present embodiment, the evaluation label 62 is printed. However, it is not limited to the evaluation label 62. For example, the evaluation may be directly printed to an equivalent to a tag, a label such as a baggage tag, or a document such as a delivery slip, an invoice, or a cover sheet.

Moreover, in the present example, the printer 61 is provided as the output unit 2 outside the handy terminal 50, and the result of degradation evaluation of the tire 49 is transmitted from the transmitting device in the handy terminal 50 to the printer 61 via the communication network 60. However, the degradation evaluation may be displayed using the display screen 51. Alternatively, a printer function may be provided to print on a band paper or the like.

That is, it is possible to perform output related to tire degradation evaluation by either providing the output unit 2 in the outside via the communication network 60 or providing the output unit 2 in the handy terminal 50.

In the handy terminal 50 according to the present embodiment, so to speak, there are four modes of (1) an input mode of basic data related to the tire 49, (2) an imaging mode using the imaging sensor 56 and the displacement sensor 57, (3) a tire degradation evaluation mode, (4) an evaluation results transmission mode. Therefore, in order to demonstrate the functions according to those modes, it is desirable to perform transition to each mode using the function key 53, and perform assignment of input functions carried by the keys including the operation key 52 and the numeric keypad 54 as necessary in each mode. The presence of the function key 53 makes it possible to reduce the total number of keys such as the operation key 52 and the numeric keypad 54, and improves operability.

As described above, in the handy terminal 50 according to the present embodiment described above, since the handy terminal 50 is formed to be portable, the degradation evaluation of the tire 49 can be performed at the storage location of the tire 49 or the like, and therefore, it is not necessary to provide a separate space for the degradation evaluation, and space efficiency can be improved. Furthermore, it is possible to always check and manage evaluation data regardless of time and place. Therefore, the tire degradation evaluation work can be performed flexibly and with high time efficiency.

Furthermore, since basic data relating to the tire can be printed together with the tire degradation evaluation, it is possible to improve the discriminability of the tire subjected to many evaluations. Moreover, since a code such as a barcode can be generated and expression can be performed including the basic data related to the tire and the result related to the degradation evaluation, the display space for these information can be reduced, and the efficiency can be increased. Moreover, the tire can be managed through the code, and the management efficiency can be improved.

Note that, in the tire degradation evaluation system 1 according to the first embodiment, although the input unit such as the operation key 52, the function key 53, and the numeric keypad 54 provided in the handy terminal 50 is not mentioned. However, a configuration may be applied in which the input unit is provided, and an input database is provided in which basic data, serial numbers, and symbols related to the tire 49 are input and stored so as to be readable.

Moreover, a configuration may be applied in which a barcode conversion unit is provided in the processing unit 3, basic data, serial numbers, or the like related to the tire 49 is read from the input database, the degradation evaluation result for the tire 49 is read from the degradation evaluation unit 13 to be converted into a barcode, and this barcode is output as a printed matter to a label, an equivalent to a label, or a document via the output unit 2, or output to a communication network or an external device as digital data. Furthermore, instead of providing the barcode conversion unit in the processing unit 3, the degradation evaluation unit 13 may have a barcode conversion function. In that case, the degradation evaluation unit 13 reads out the basic data or the like related to the tire 49, and after the degradation evaluation unit 13 performs the tire degradation evaluation, barcode conversion is performed for the basic data related to the tire together with the tire degradation evaluation.

The operations and effects exhibited by providing these input unit and barcode conversion unit are similar to those already described with the handy terminal 50.

INDUSTRIAL APPLICABILITY

As described above, the invention described in claims 1 to 3 of the present invention can quantitatively evaluate the degradation of secondhand tires, and when the owner uses the present invention for tire maintenance of a private car, the owner can use a handy type tire degradation evaluation system preferably, and when a taxi company or bus company uses the present invention for maintenance of its own commercial vehicle, a tire degradation evaluation system of a type in which the tire is accommodated in a casing can be used preferably. Furthermore, in the maintenance, inspection of customer cars by car dealers and private car factories, or the assessment of tire value by secondhand car dealers, or the like, a tire degradation evaluation system of handy type or of a type in which the tire is accommodated in a casing can be selected according to the business scale, and both types are widely available.

DESCRIPTION OF REFERENCE SIGNS

1: Tire degradation evaluation system
2: Output unit
3: Processing unit
4: Displacement scanning measurement unit
5: Imaging unit
6: Processing database
7: Evaluation database
8: Groove width calculation unit
9: Groove depth calculation unit
10: Evaluation region extraction unit
11: Smoothing processing unit
12: Edge detection processing unit
13: Degradation evaluation unit
14: Distance data
15: Ground contact surface image data
16: Groove width data
17: Groove depth data
18: Groove number data
19: Evaluation region image data
20: Smoothing processing image data
21: Edge processing image data
22: Crack ratio data
23: Evaluation threshold data
24: Evaluation rank data
25: Output data
26: Groove portion
27: Casing
27a: Support floor

28: Slide rail
29: Lifter
30: Motor
31: Slider
32: Camera
33: Distance measurement sensor
34: Small diameter tire
35: Large diameter tire
36: Lighting device
37: Driving roller
37a: Motor
38: Roller
39: Illuminance meter
40: Sequencer
41: Image processing CPU
42: Monitor
49: Tire
50: Handy terminal
51: Display screen
52: Operation key
53: Function key
54: Numeric keypad
55: Power switch
56: Imaging sensor
57: Displacement sensor
60: Communication network
61: Printer
62: Evaluation label
63: Evaluation rank
64: Barcode
65: Tire specification data
66: Tire manufacturing data
A: Evaluation region
B: Quality evaluation value
C: Groove depth display
D: Degree of crack
E: Groove width value
F: Groove depth value
G: Tire width direction scale
H: Groove depth direction scale
J: Back surface of handy terminal
LI: Distance between tire and distance measurement sensor
L2: Distance between tire and distance measurement sensor

**Claims**

1. A tire degradation evaluation system comprising:

     a displacement measurement unit that measures displacement of a ground contact surface of a tire and generates distance data that enables discrimination between a crest portion and a groove portion (26) of the ground contact surface;
     an imaging unit (5) that photographs the ground contact surface and generates ground contact surface image data (15);

an evaluation region extraction unit (10) that extracts an evaluation region for detecting a crack from a region of the groove portion (26) in the ground contact surface with reference to the distance data (14) from the ground contact surface image data (15) to generate evaluation region image data (19);

a smoothing processing unit (11) that generates smoothing processing image data (20) obtained by smoothing and removing noise due to a difference from an average color of the groove portion (26) with respect to the evaluation region image data (19);

an edge detection processing unit (12) that performs edge processing of detecting a boundary portion where colors of the groove portion (26) and the crack change from the smoothing processing image data (20) as an edge to generate edge processing image data (21) that clarifies the boundary portion of the crack;

a degradation evaluation unit (13) that calculates a ratio of the boundary portion of the crack of the edge processing image data (21) in the whole to generate crack ratio data (22);

an output unit (2) that outputs the crack ratio data (22); and

a casing (27) that accommodates the tire, wherein the casing (27) comprises in the inside thereof, a pair of rollers (38) that supports and rolls the tire, a slider (31) capable of scanning in a width direction of the ground contact surface of the tire accommodated and mounted with the displacement measurement unit and the imaging unit (5), and a control unit that controls driving of the slider (31) and the rollers (38).

2. The tire degradation evaluation system according to claim 1, wherein the slider (31) is provided at an intermediate position between the pair of rollers (38), and the control unit calculates a tire diameter from distance information with the ground contact surface of the tire obtained by the displacement measurement unit and positional information of the rollers (38), and calculates a tire rolling angle from the tire diameter and rotation information of the roller (38).

3. A tire degradation evaluation system comprising in a portable terminal:

a displacement measurement unit that measures displacement of a ground contact surface of a tire and generates distance data (14) that enables discrimination between a crest portion and a groove portion (26) of the ground contact surface;

an imaging unit (5) that photographs the ground contact surface and generates ground contact surface image data (15);

an evaluation region extraction unit (10) that extracts an evaluation region (A) for detecting a crack from a region of the groove portion (26) in the ground contact surface with reference to the distance data (14) from the ground contact surface image data (15) to generate evaluation region image data (19);

a smoothing processing unit (11) that generates smoothing processing image data (20) obtained by smoothing and removing noise due to a difference from an average color of the groove portion (26) with respect to the evaluation region image data (19);

an edge detection processing unit (12) that performs edge processing of detecting a boundary portion where colors of the groove portion (26) and the crack change from the smoothing processing image data (20) as an edge to generate edge processing image data (21) that clarifies the boundary portion of the crack; and

a degradation evaluation unit (13) that calculates a ratio of the boundary portion of the crack of the edge processing image data (21) in the whole to generate crack ratio data (22).

FIG. 1

FIG. 2

START

| S1 | DISPLACEMENT MEASUREMENT | ~ 4 |

| S2 | MEASUREMENT TARGET IMAGING | ~ 5 |

| S3 | GROOVE WIDTH OPERATION | ~ 8 |

| S4 | GROOVE DEPTH OPERATION | ~ 9 |

| S5 | EVALUATION REGION EXTRACTION | ~ 10 |

| S6 | NOISE REMOVAL PROCESSING | ~ 11 |

| S7 | EDGE DETECTION PROCESSING | ~ 12 |

| S8 | DEGRADATION EVALUATION UNIT | ~ 13 |

| S9 | OUTPUT | ~ 2 |

~ 3

PROCESSING DB 6

EVALUATION DB 7

END

FIG. 3

(a)

(b)    (c)    (d)

FIG. 4

FIG. 5

|  | RANK S | RANK A | RANK B | RANK C | RANK D |
|---|---|---|---|---|---|
| 1 | 0.326221 | 0.157313 | 2.86075 | 6.55473 | 6.61138 |
| 2 | 0.399881 | 0.076696 | 2.96266 | 5.9323 | 6.16249 |
| 3 | 0.336935 | 0.099405 | 1.9983 | 7.00293 | 7.06633 |
| 4 | 0.465559 | 0.788111 | 3.0824 | 3.67331 | 5.64098 |
| 5 | 3.19176 | 1.42493 | 2.30172 | 5.78591 | 7.35923 |
| 6 | 0.268437 | 0.211325 | 2.67625 | 5.46135 | 5.72515 |
| 7 | 0.278873 | 0.0118 | 3.33935 | 7.15786 | 6.75951 |
| 8 | 0.96359 | 0.066508 | 2.27543 | 4.73519 | 6.04545 |
| 9 | 0.171034 | 0.524892 | 2.31331 | 6.02045 | 6.7423 |
| 10 | 0.280226 | 0.214131 | 2.47011 | 2.62581 | 5.73423 |
| 11 | 0.225073 | 0.042015 | 1.85509 | 5.93484 | 7.13525 |
| 12 | 0.196486 | 0.064721 | 2.63865 | 6.3699 | 6.29481 |
| 13 | 0.477157 | 0.026863 | 3.31384 | 3.5978 | 7.21515 |
| 14 | 0.460509 | 0.058821 | 2.0977 | 4.09459 | 7.10598 |
| 15 | 0.339872 | 0.045802 | 2.69434 | 7.3128 | 6.59276 |
| 16 | 0.403139 | 0.959532 | 4.50835 | 4.67919 | 6.71883 |
| 17 | 0.356315 | 0.854261 | 3.53166 | 7.08325 |  |
| 18 | 0.273721 | 0.268537 | 4.0326 | 2.83395 |  |
| 19 | 0.253161 | 0.109238 | 3.68564 | 7.1883 |  |
| 20 | 0.199775 | 0.245439 | 3.14388 |  |  |
| 21 | 0.163497 | 0.536179 | 2.14576 |  |  |
| 22 | 0.188234 | 0.060072 |  |  |  |
| 23 | 0.959544 | 0.110847 |  |  |  |
| 24 | 0.320025 | 0.055066 |  |  |  |
| MEDIAN | 0.323123 | 0.110043 | 2.69434 | 5.9323 | 6.665105 |
| AVERAGE VALUE | 0.479126 | 0.292188 | 2.853704 | 5.476024 | 6.556864 |

FIG. 6

FIG. 7

| RANK | DEGRADATION EVALUATION VALUE |
|:---:|:---:|
| S | $\leqq 0.5$ |
| A | $0.5 < \quad \leqq 2.0$ |
| B | $2.0 < \quad \leqq 4.0$ |
| C | $4.0 < \quad \leqq 6.0$ |
| D | $6.0 <$ |

FIG. 8

(a) 90°

(b) 45°

(c) 30°

FIG. 9

| shot | | position | size | depth | |
|---|---|---|---|---|---|
| IMAGE PROCESSING DATE | MEASUREMENT LOCATION | GROOVE POSITION (mm) | GROOVE WIDTH (*10mm) | GROOVE DEPTH (*10mm) | DEGRADATION EVALUATION VALUE (%) |
| 17- 2-24-16-5-46 | 1 | 108 | 60 | 57 | 1.95327 |
| 17- 2-24-16-5-57 | | 82 | 65 | 62 | 3.09604 |
| 17- 2-24-16-6-2 | | 55 | 60 | 60 | 2.05976 |
| | | | | | |
| 17- 2-24-16-6-39 | 2 | 106 | 60 | 60 | 3.19071 |
| 17- 2-24-16-6-45 | | 79 | 65 | 63 | 3.1604 |
| 17- 2-24-16-6-51 | | 53 | 65 | 60 | 2.02582 |
| | | | | | |
| 17- 2-24-16-7-26 | 3 | 106 | 60 | 58 | 2.16315 |
| 17- 2-24-16-7-36 | | 80 | 70 | 61 | 2.54854 |
| 17- 2-24-16-7-42 | | 53 | 60 | 55 | 1.65391 |
| | | | | | |
| 17- 2-24-16-8-17 | 4 | 107 | 60 | 55 | 2.1187 |
| 17- 2-24-16-8-27 | | 80 | 70 | 61 | 3.07232 |
| 17- 2-24-16-8-33 | | 54 | 60 | 61 | 1.7689 |
| | | | | | |
| 17- 2-24-16-9-8 | 5 | 106 | 60 | 59 | 2.46154 |
| 17- 2-24-16-9-14 | | 80 | 75 | 60 | 3.14793 |
| 17- 2-24-16-9-21 | | 53 | 60 | 21 | 2.27369 |
| | | | | | |
| 17- 2-24-16-9-56 | 6 | 105 | 60 | 59 | 2.86584 |
| 17- 2-24-16-10-2 | | 79 | 75 | 64 | 2.52754 |
| 17- 2-24-16-10-12 | | 53 | 60 | 60 | 1.55709 |
| | | | | | |
| 17- 2-24-16-10-47 | 7 | 106 | 60 | 57 | 3.34396 |
| 17- 2-24-16-10-53 | | 79 | 70 | 61 | 3.22075 |
| 17- 2-24-16-10-59 | | 53 | 55 | 20 | 1.87597 |
| | | | | | |
| 17- 2-24-16-11-39 | 8 | 106 | 60 | 55 | 2.29669 |
| 17- 2-24-16-11-45 | | 80 | 75 | 58 | 2.87204 |
| 17- 2-24-16-11-51 | | 58 | 10 | 0 | 1.03664 |
| | | | | MEDIAN | 2.379115 |
| | | | | TIRE RANK | B |

FIG. 10

(a)

QUALITY EVALUATION VALUE

品質評価値

B565 ← B

8

6 ← C

4

2 ← D

(b)

H
↓

GROOVE WIDTH    GROOVE DEPTH

1.0    0.0
7.5    5.8
6.0    5.5
0.0    0.0

30
25
20
15
10
5
0
0    50    100    150    200    250 ← G

↑          ↑
E          F

FIG. 11

FIG. 12

FIG. 13

X: CORRESPONDING TO L1, L2

FIG. 14

EP 3 614 097 A1

FIG. 15

(a)

34, 35

27a

27a

38

37

(b)

34, 35

27a

27a

38

37

(c)

34, 35

38

37

FIG. 16

```
                          ┌─────────────┐
                          │    START    │
                          └─────────────┘
                                 │
                                 ▼ ◄──────────────┐
                           ╱─────────────╲         │ N
              S 1        ╱   RETURN TO    ╲────────┘
                         ╲    ORIGIN      ╱
                          ╲─────────────╱
                                 │ Y
                                 ▼
                        ┌─────────────────┐
                        │ SET TIRE        │
              S 2       │ MEASUREMENT     │
                        │ PITCH ANGLE     │
                        └─────────────────┘
                                 │
                                 ▼ ──────────────────────┐
                          ╱──────────────╲                │
                        ╱  IS NUMBER OF    ╲      Y        │
                       ╱ MEASUREMENT TIMES IS╲─────────────┤
              S 3      ╲EQUAL TO OR MORE THAN SET╱          │
                        ╲NUMBER OF TIMES OF ╱               │
                          ╲MEASUREMENT ╱                    │
                                 │ N                        │
                                 ▼                          ▼
                  ┌────────────────────────────┐    ┌───────────┐
                  │ <FORWARD PATH>             │    │    END    │
                  │ 1. ACQUIRE DATA OF EACH    │    └───────────┘
                  │    GROOVE POSITION         │
                  │ 2. ACQUIRE DATA OF EACH    │
              S 4 │    GROOVE WIDTH            │
                  │ 3. ACQUIRE TIRE WIDTH DATA │
                  │ 4. ACQUIRE GROOVE DEPTH DATA│
                  │                            │
                  │ DATA OF 1 TO 4 IS NUMERICAL│
                  │ VALUE (DIGITAL)            │
                  └────────────────────────────┘
                                 │
                                 ▼
                  ┌────────────────────────────┐
                  │ <RETURN PATH>              │
                  │ 1. STOP AT GROOVE CENTER   │
                  │    POSITION                │
              S 5 │ 2. TRANSMIT MEASUREMENT    │
                  │    DEMAND SIGNAL TO IMAGE  │
                  │    CPU                     │
                  └────────────────────────────┘
                                 │
                                 ▼
                  ┌────────────────────────────┐
                  │      TIRE ROTATION         │
                  │                            │
              S 6 │    STOP AT ROTATION        │
                  │    ANGLE ACCORDING         │
                  │    TO SET VALUE END        │
                  └────────────────────────────┘
                                 │
                                 ▼
```

FIG. 17

## INTERNATIONAL SEARCH REPORT

| International application No. |
| --- |
| PCT/JP2019/002461 |

**A. CLASSIFICATION OF SUBJECT MATTER**
Int. Cl. G01B11/00(2006.01)i, B60C19/00(2006.01)i

According to International Patent Classification (IPC) or to both national classification and IPC

**B. FIELDS SEARCHED**

Minimum documentation searched (classification system followed by classification symbols)
Int. Cl. G01B11/00, B60C19/00

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 3209568 U (SEAPARTS CO., LTD.) 30 March 2017, paragraphs [0015]-[0027], [0079]-[0093], fig. 2, 3, 1Q-16 & WO 2015/041082 A1 | 1-3 |
| A | JP 2017-003404 A (HITACHI, LTD.) 15 January 2017, paragraph [0032], fig. 24, 25 & US 2016/0364851 A1, paragraph [0060], fig. 24, 25 | 1-3 |
| A | JP 2014-135007 A (LG DISPLAY CO., LTD.) 24 July 2014, paragraphs [0018]-[0022] (Family: none) | 1-3 |
| A | JP 2014-240800 A (BRIDGESTONE CORP.) 25 December 2014, paragraphs [0007], [0012], [0022]-[0024], fig. 1, 2 (Family: none) | 1-3 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06.02.2019 | 12.03.2019 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/002461

C (Continuation).    DOCUMENTS CONSIDERED TO BE RELEVANT

| Category* | Citation of document, with indication, where appropriate, of the relevant passages | Relevant to claim No. |
|---|---|---|
| A | JP 9-329433 A (ANZEN MOTOR CAR CO., LTD.) 22 December 1997, paragraphs [0003]-[0005], [0015], [0019], fig. 1-5 (Family: none) | 1-3 |
| A | JP 2015-161575 A (SEAPARTS CO., LTD.) 07 September 2015, paragraphs [0009], [0029]-[0036], [0043]-[0048], fig. 1-4 (Family: none) | 1-3 |
| A | JP 2004-354259 A (TOYO TIRE AND RUBBER CO., LTD.) 16 December 2004, paragraphs [0019], [0020], fig. 1 (Family: none) | 1-3 |
| A | JP 2013-174547 A (SHARP CORP.) 05 September 2013, claim 1, paragraphs [0033], [0119], [0122] (Family: none) | 1-3 |
| A | US 4475383 A (FRAUNHOFER-GESELLSCHAFT ZUR FOERDERUNG DER ANGEWANDTEN FORSCHUNG E. V.) 09 October 1984, entire text, all drawings & EP 63245 A1 | 1-3 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009102009 A
- JP 2006123703 A
- JP 2001013081 A

- US 20150139498 A
- JP 2015161575 A
- JP 2011179925 A